(19) Europäisches Patentamt
European Patent Office
Office européen des brevets

(11) EP 3 551 701 B1

(12) **FASCICULE DE BREVET EUROPEEN**

(45) Date de publication et mention de la délivrance du brevet:
**09.04.2025 Bulletin 2025/15**

(21) Numéro de dépôt: **17817812.5**

(22) Date de dépôt: **06.12.2017**

(51) Classification Internationale des Brevets (IPC):
***C08L 95/00*** *(2006.01)*

(52) Classification Coopérative des Brevets (CPC):
(C-Sets disponibles)
**C08L 95/00;** C08L 2555/74 (Cont.)

(86) Numéro de dépôt international:
**PCT/FR2017/053412**

(87) Numéro de publication internationale:
**WO 2018/104659 (14.06.2018 Gazette 2018/24)**

(54) **LIANTS SOLIDES**

FESTE BINDEMITTEL

SOLID BINDERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2016 FR 1662030**

(43) Date de publication de la demande:
**16.10.2019 Bulletin 2019/42**

(73) Titulaire: **TotalEnergies OneTech**
**92400 Courbevoie (FR)**

(72) Inventeur: **VINCENT, Régis**
**69520 Grigny (FR)**

(74) Mandataire: **Bandpay & Greuter**
**11 rue Christophe Colomb**
**75008 Paris (FR)**

(56) Documents cités:
**JP-A- H02 169 669**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC):
(Cont.)

C-Sets
**C08L 95/00, C08L 91/00, C08K 5/00**

## Description

### Domaine technique

La présente invention concerne des liants à base d'huile et éventuellement de brai, solides à froid et sous forme divisée, et leur utilisation comme agent réjuvénant pour la production de revêtements à partir d'agrégats d'enrobés recyclés. Elle a également pour objet un procédé de transport et/ou de stockage et/ou de manipulation de liants solides à froid et sous forme divisée.

### Etat de la technique antérieure

L'invention vise à faciliter et à améliorer l'utilisation d'agrégats d'enrobés bitumineux recyclés lors de la fabrication de nouveaux enrobés bitumineux. Les agrégats d'enrobés bitumineux recyclés sont des matériaux issus de l'opération de réfection d'une couche de revêtement bitumineux, tels que les revêtements de routes, de trottoirs, de terrains de sport, qui sont essentiellement composés d'un liant bitumineux et de granulats. Plus spécifiquement, les agrégats d'enrobés bitumineux recyclés sont issus de l'opération de réfection de revêtement bitumineux qui peuvent être, soit la couche de roulement, ou soit une des couches de structure. Les agrégats d'enrobés bitumineux recyclés sont essentiellement composés de granulats et de résidus de liant bitumineux adhérant à ces granulats. Les résidus de liants bitumineux sont également appelés liants bitumineux vieillis. La formulation de nouveaux enrobés bitumineux à partir de ces matériaux de recyclage pose des difficultés : la présence de résidus bitumineux solidifiés, d'origines et/ou de compositions variées, fournit des compositions peu homogènes, avec des mélanges de matériaux bitumineux qui présentent des températures de ramollissement et des pénétrabilités non homogènes. La distribution de taille des agrégats de recyclage peut être large et constitue un obstacle à l'obtention d'un matériau régénéré homogène. Le vieillissement du liant bitumineux conduit également à une modification de ses propriétés par rapport à une composition de liant bitumineux fraichement préparée, notamment une pénétrabilité plus basse et une température de ramollissement plus élevée que celle du matériau d'origine.

Le réjuvénant doit permettre à la fois d'ajuster la consistance et la constitution chimique du liant bitumineux présent dans les agrégats d'enrobés recyclés. Il facilite la remobilisation des liants bitumineux vieillis présents dans les agrégats d'enrobés bitumineux, c'est-à-dire qu'il se mélange facilement avec le liant bitumineux vieilli et les granulats formant tous deux les agrégats d'enrobés recyclés. Ce mélange donne des enrobés dans lesquels le liant bitumineux présente à nouveau une consistance et une constitution chimique lui permettant d'avoir les propriétés mécaniques attendues. Le réjuvénant doit permettre de formuler une composition dont le liant présente une température de ramollissement et une pénétrabilité satisfaisantes.

On utilise habituellement comme réjuvénants des agrégats d'enrobés recyclés, des compositions de liant à base d'huile, éventuellement additivées de brai.

Le transport de ces liants est aujourd'hui réalisé par des camions citerne calorifugés ou dans des iso-containers permettant un réchauffage au moyen d'un fluide caloporteur ou un réseau vapeur. L'utilisateur doit être équipé de bacs de stockage également maintenus à chaud jusqu'à l'utilisation du liant. Ces contraintes entrainent des coûts énergétiques et des coûts d'équipement importants, aussi bien pour le fournisseur du liant que pour son client. En outre, le maintien en température du liant pendant une période donnée peut affecter les propriétés du liant, notamment les propriétés de vieillissement et ainsi changer les performances finales des produits dans lesquels le liant est incorporé.

Il est connu que les organogélateurs de faibles masses moléculaires permettent de gélifier des liquides de façon thermoréversible. Toutefois, il n'est pas possible de prévoir quel organogélateur est capable de solidifier quel liquide. En outre, la présence d'un organogélateur dans un liquide a une influence sur les propriétés de ce liquide et l'invention a pour objectif de formuler un liant à base d'huile et éventuellement de brai, solide à température ambiante, sans que ses propriétés d'usage, en particulier ses propriétés comme agent rejuvénant dans la production de revêtements à partir d'agrégats d'enrobés recyclés soient modifiées par la présence des additifs permettant sa solidification.

WO 2008/107551 enseigne des compositions de bitume comprenant un additif de type organogélateur et présentant des caractéristiques de viscosité et de dureté thermoréversibles. Il est connu, notamment de WO 2016/016320 d'utiliser des organogélateurs pour conditionner des bitumes sous forme solide à froid et divisée. Toutefois, la composition d'un bitume est très éloignée de celle d'un liant à base d'huile et éventuellement de brai, et les applications visées sont très différentes.

JP 02 169669 divulgue la préparation de compositions bitumineuses dont l'intensité olfactive et la quantité de fumée libérée lors de leur chauffage sont réduites. Les compositions bitumineuses comprennent du bitume, un élastomère thermoplastique à base de styrène et du dibenzylidène sorbitol.

Le but de la présente invention est de proposer un liant à base d'huile et éventuellement de brai, utilisable comme agent rejuvénant dans la production de revêtements à partir d'agrégats d'enrobés bitumineux recyclés, qui soit sous forme divisée et solide à température ambiante et qui puisse être rendu fluide par un simple chauffage. En particulier, un but de

l'invention est de proposer un liant à base d'huile et éventuellement d'un brai, qui soit sous forme divisée et solide à température ambiante, et qui puisse être mélangé à des agrégats d'enrobés bitumineux recyclés en vue de produire des revêtements bitumineux. Notamment, on a cherché à mettre au point un liant à base d'huile et éventuellement de brai, sous forme solide et sous forme divisée, comprenant un organogélateur dont la présence ne modifie pas de façon significative les propriétés d'usage de la composition réjuvénante ou du liant réjuvénant, ni celles des compositions d'enrobés bitumineux dans lesquelles elle est incorporée.

L'invention a encore pour objet de proposer un procédé de transport et/ou de stockage et/ou de manipulation à température ambiante d'un liant sous forme solide et sous forme divisée.

Un autre objectif de l'invention est de proposer un procédé permettant une manipulation facile du liant lors des opérations de manutention.

Un autre objectif de l'invention est de proposer un procédé écologique et économique pour transporter un liant et éviter l'utilisation de moyens supplémentaires pour le maintien en température de ce liant lors de son transport et/ou de son stockage et/ou de sa manipulation.

**Résumé de l'invention**

L'invention concerne un liant solide à température ambiante comprenant :

- au moins une huile hydrocarbonée choisie parmi les huiles aromatiques ayant une teneur en composés aromatiques comprise entre 30 et 95% en masse,,
- au moins un brai,
- au moins un additif chimique organogélateur.

Selon un mode de réalisation préféré, l'huile hydrocarbonée est choisie parmi les huiles hydrocarbonées d'origine pétrolière.

Selon une première variante préférée, l'huile hydrocarbonée est choisie parmi les huiles aromatiques ayant une teneur en composés aromatiques comprise entre 50 et 95% en masse, plus avantageusement comprise entre 60 et 95% en masse par rapport à la masse totale de l'huile aromatique.

Selon un mode de réalisation préféré de cette variante, l'huile aromatique a une viscosité cinématique à 100°C comprise entre 0,1 et 150 $mm^2/s$, avantageusement comprise entre 5 et 120 $mm^2/s$, plus avantageusement comprise entre 7 et 90 $mm^2/s$.

Selon un mode de réalisation préféré, le brai a une pénétrabilité à 25°C allant de 0 à 20 1/10 mm, étant entendu que la pénétrabilité est mesurée selon la norme EN 1426.

Selon une première variante, le brai présente une température de ramollissement bille et anneau (TBA), mesurée selon la norme EN 1427, allant de 115°C à 175°C.

Selon un mode de réalisation préféré de cette première variante, le brai est un brai oxydé.

Selon une seconde variante, le brai présente une température de ramollissement bille et anneau (TBA), mesurée selon la norme EN 1427, allant de 55°C à 110°C.

Selon un mode de réalisation préféré de cette seconde variante, le brai est issu d'une opération de désasphaltage par l'addition d'un solvant aliphatique en $C_3$-$C_4$.

Selon un mode de réalisation préféré, le composé organogélateur présente une masse molaire inférieure ou égale à 2000 $g.mol^{-1}$.

Selon un mode de réalisation préféré, le liant comprend de 0,2 % à 5 % en masse, plus préférentiellement de 0,5 % à 3,5 % en masse d'additif organogélateur par rapport à la masse totale du liant.

Selon un mode de réalisation préféré, le liant est sous forme de granules ou de pains.

L'invention concerne encore un kit comprenant au moins :

- un liant solide à température ambiante tel que défini ci-dessus et de façon détaillée ci-dessous ou un liant solide consistant en une huile hydrocarbonée d'origine pétrolière ou synthétique et leurs mélanges, et
- une capsule comprenant au moins un additif.

L'invention concerne encore un procédé de préparation d'un liant solide à température ambiante tel que défini ci-dessus et de façon détaillée ci-dessous, comprenant :

(i) Le mélange de l'huile et du brai, et le chauffage à une température comprise entre 140 et 200°C,
(ii) L'ajout du composé organogélateur, le mélange et le chauffage à une température comprise entre 140 et 200°C,
(iii) L'ajout éventuel d'un ou de plusieurs autres additifs, le mélange et le chauffage à une température comprise entre 140 et 200°C,

(iv) La mise en forme de la composition, par exemple sous forme de granules ou de pains.
(v) Le refroidissement à température ambiante.

L'invention concerne également un procédé de transport et/ou de stockage et/ou de manipulation d'un liant solide à température ambiante et sous forme divisée tel que défini ci-dessus et de façon détaillée ci-dessous, ou de kit comprenant un tel liant, le liant étant transporté et/ou stocké et/ou manipulé sous forme de pains ou de granules solide à température ambiante.
L'invention concerne encore l'utilisation d'un liant solide à température ambiante et sous forme divisée comprenant :

- au moins une huile hydrocarbonée choisie parmi les huiles aromatiques ayant une teneur en composés aromatiques comprise entre 30 et 95% en masse,
- au moins un additif chimique organogélateur,

pour la fabrication d'enrobés bitumineux comprenant des agrégats d'enrobés bitumineux recyclés.
Selon un mode de réalisation préféré, le liant solide à température ambiante et sous forme divisée comprend en outre au moins un brai, de préférence présentant une pénétrabilité à 25°C allant de 0 à 20 1/10 mm, et avantageusement choisi parmi :

- un brai issu d'une opération de désasphaltage par l'addition d'un solvant aliphatique en $C_3$-$C_4$ et présentant une température de ramollissement bille et anneau (TBA) allant de 55°C à 110°C ;
- un brai un brai oxydé présentant une température de ramollissement bille et anneau (TBA) allant de 115°C à 175°C,

étant entendu que la pénétrabilité est mesurée selon la norme EN 1426 et que la TBA est mesurée selon la norme EN 1427.
Selon un mode de réalisation préféré de l'utilisation, le liant solide à température ambiante et sous forme divisée est tel que défini ci-dessus ou de façon détaillée ci-dessous ou sous forme d'un kit.

**Description détaillée**

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.
L'expression « compris entre X et Y » inclut les bornes, sauf mention contraire explicite. Cette expression signifie donc que l'intervalle visé comprend les valeurs X, Y et toutes les valeurs allant de X à Y.
Par « liant » on entend au sens de la présente invention une composition comprenant au moins une huile et éventuellement au moins un brai, ladite composition étant utilisable en mélange avec des granulats, en substitution des liants à base de bitume, pour la préparation par exemple d'enrobés bitumineux.
Par « liant solide à température ambiante », on entend un liant présentant un aspect solide à température ambiante dans des conditions de transport et/ou de stockage et/ou de manipulation. Plus précisément, on entend un liant solide qui conserve son aspect solide tout au long du transport et/ou du stockage et/ou de la manipulation à température ambiante, c'est-à-dire un liant solide qui ne flue pas à une température allant jusqu'à 80°C, avantageusement de 5°C à 70°C, de préférence de 10°C à 70°C, plus préférentiellement de 10°C à 60°C, encore plus préférentiellement de 15°C à 50°C, et à des forces de pressions issues des conditions de transport et/ou de stockage et/ou de manipulation.
Par « liant solide à température ambiante et sous forme divisée », on entend un liant solide à température ambiante qui est conditionné sous une forme divisée, c'est-à-dire sous forme d'unités distinctes les unes des autres, que l'on nomme granules ou pains.
Le liant selon l'invention est également désigné indifféremment dans la présente description « liant solide » ou « composition solide ».
Le liant selon l'invention est désigné indifféremment dans la présente description par « liant solide à froid et sous forme divisée » ou « liant additivé ».
Le liant selon l'invention est également désigné dans la présente invention par « liant réjuvénant ».
Par « pénétrabilité », on entend ici la mesure dite de « pénétrabilité à l'aiguille » qui est réalisée au moyen d'un test normalisé NF EN 1426 à 25°C (P25). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100g. La norme NF EN 1426 remplace la norme homologuée NF T 66-004 de décembre 1986 avec effet au 20 décembre 1999 (décision du Directeur Général d'AFNOR en date du 20 novembre 1999).

L'huile

L'huile peut être de tout type, elle est choisie en fonction des conditions de l'application ultérieure, notamment de l'origine des agrégats d'enrobés bitumineux recyclés. Il peut s'agir d'une huile hydrocarbonée d'origine pétrolière, d'une huile hydrocarbonée d'origine synthétique ou leur mélange.
De préférence l'huile est une huile hydrocarbonée d'origine pétrolière. Elle peut être de type aromatique ou paraffinique.
Selon un premier mode de réalisation, l'huile est composée de 90 à 100% en masse d'au moins une huile hydrocarbonée d'origine pétrolière, avantageusement de 95 à 100%, encore mieux de 98 à 100%, en masse d'au moins une huile hydrocarbonée d'origine pétrolière. Encore plus avantageusement, l'huile est constituée d'une d'huile hydrocarbonée ou d'un mélange d'huiles hydrocarbonées d'origine pétrolière.
Dans un premier mode de réalisation de l'invention, l'huile hydrocarbonée d'origine pétrolière est choisie parmi les huiles aromatiques.
Les huiles aromatiques ont une teneur en composés aromatiques comprise entre 30 et 95% en masse, avantageusement comprise entre 50 et 95% en masse, plus avantageusement comprise entre 60 et 95% en masse par rapport à la masse totale de l'huile aromatique (méthode SARA : Saturés/Aromatiques/Résines/Asphaltènes).
Plus préférentiellement, les huiles aromatiques ont une teneur en composés saturés comprise entre 1 et 20% en masse, avantageusement comprise entre 3 et 15% en masse, plus avantageusement comprise entre 5 et 10% en masse (méthode SARA : Saturés/Aromatiques/Résines/Asphaltènes).
Plus préférentiellement, les huiles aromatiques ont une teneur en composés résiniques comprise entre 1 et 10% en masse, avantageusement comprise entre 3 et 5% en masse, (méthode SARA : Saturés/Aromatiques/Résines/Asphaltènes).
Les teneurs en composés saturés, résiniques et aromatiques mentionnées dans la présente demande sont déterminées selon la norme ASTM D2140, en % en masse par rapport à la masse de l'huile.
Plus préférentiellement, les huiles aromatiques ont une viscosité cinématique à 100°C comprise entre 0,1 et 150 $mm^2/s$, avantageusement comprise entre 5 et 120 $mm^2/s$, plus avantageusement comprise entre 7 et 90 $mm^2/s$ (Méthode ASTM D 445).
Plus préférentiellement, les huiles aromatiques ont un point éclair Cleveland supérieur ou égal à 150°C, avantageusement compris entre 150°C et 600°C, plus avantageusement compris entre 200°C et 400°C (Méthode EN ISO 2592).
Plus préférentiellement, les huiles aromatiques ont un point aniline compris entre 20°C et 120°C, avantageusement compris entre 40°C et 120°C (Méthode ASTM D611).
Plus préférentiellement, les huiles aromatiques ont une masse volumique à 15°C comprise entre 400 $kg/m^3$ et 1500 $kg/m^3$, avantageusement comprise entre 600 $kg/m^3$ et 1200 $kg/m^3$, plus avantageusement comprise entre 800 $kg/m^3$ et 1000 $kg/m^3$ (Méthode ASTM D4052).
Selon ce mode de réalisation avantageux, l'huile aromatique comprend des extraits aromatiques de résidus de pétrole, obtenus par extraction ou désaromatisation de résidus de distillations de coupes pétrolières.
Les extraits aromatiques sont des produits secondaires du processus de raffinage des pétroles bruts, obtenus notamment à partir des produits de la distillation sous vide des résidus atmosphériques. Ils résultent d'une simple ou d'une double extraction du raffinat valorisable dans les lubrifiants, au moyen d'un solvant polaire. Les différents extraits sont classés en différentes catégories en fonction de leur procédé d'obtention et sont les suivants :

- Les DAE (Distillate Aromatic Extract en anglais, ou extrait aromatique de distillat)
- les MES (Mild Extract Solvate en anglais ou solvant d'extraction douce),
- les TDAE (Treated Distillate Aromatic Extract en anglais ou extrait distillé aromatique traité),
- Les RAE (Residual Aromatic Extract en anglais ou extrait aromatique résiduel),
- Les TRAE (Treated Residual Aromatic Extract en anglais ou extrait aromatique résiduel traité)

Par exemple, les huiles aromatiques utilisables selon l'invention peuvent être choisies parmi les produits suivants commercialisés par la société TOTAL sous les dénominations : Plaxolène 50 ® (également vendu sous la marque Régénis 50 ®), Plaxolène TD346 ® et Plaxolène MS132 ®.
Les teneurs respectives en composés paraffiniques, naphténiques et aromatiques dépendent dans une certaine mesure de la nature du pétrole brut à l'origine de l'huile aromatique et du processus de raffinage utilisé.
Par exemple, le Plaxolène 50 ® ou Régénis 50 ® est un RAE (Residual Aromatic Extract) qui présente :

- une masse volumique à 15°C comprise entre 980 $kg/m^3$ et 1010 $kg/m^3$ (Méthode ASTM D4052),
- un point éclair (Cleveland) d'environ 230°C (Méthode EN ISO 2592),
- une viscosité cinématique à 100°C comprise entre 60 et 85 $mm^2/s$ (Méthode ASTM D 445),

- un point d'aniline compris entre 53 et 65°C (Méthode ASTM D611).

Par exemple, le Plaxolène TD346 ® est un TDAE (Treated Distillates Aromatic Extract) qui présente :

- une masse volumique à 15°C comprise entre 940 kg/$m^3$ et 970 kg/$m^3$ (Méthode ASTM D4052),
- un point éclair (Cleveland) d'environ 220°C (Méthode EN ISO 2592),
- une viscosité cinématique à 100°C comprise entre 16 et 23 $mm^2$/s (Méthode ASTM D 445),
- un point d'aniline compris entre 64 et 72°C (Méthode ASTM D611).

Par exemple, le Plaxolène MS132 ® est un MES (Mild Extract Solvate) qui présente :

- une masse volumique à 15°C comprise entre 895 kg/$m^3$ et 925 kg/$m^3$ (Méthode ASTM D4052),
- un point éclair (Cleveland) d'environ 230°C (Méthode EN ISO 2592),
- une viscosité cinématique à 100°C comprise entre 13 et 17 $mm^2$/s (Méthode ASTM D 445),
- un point d'aniline compris entre 85 et 100°C (Méthode ASTM D611).

Selon un second mode de réalisation de la présente divulgation, l'huile est une huile paraffinique comprenant majoritairement des extraits paraffiniques de résidus de pétrole. Selon ce mode de réalisation spécifique, avantageusement, l'huile comprend une teneur totale en composés paraffiniques d'au moins 50% en masse, de préférence d'au moins 60% en masse, par exemple comprise entre 50% et 90%, de préférence entre 60% et 90%, plus préférentiellement entre 50% et 80% et en particulier compris entre 55% et 75% ou en particulier comprise entre 60% et 75%.

Dans un mode de réalisation plus spécifique, l'huile contient en outre une teneur totale en composés naphténiques qui n'excède pas 25%, par exemple comprise entre 5% et 25%, et en particulier compris entre 10% et 25%.

Dans un mode de réalisation plus spécifique, l'huile contient en outre une teneur totale en composés aromatiques qui n'excède pas 25%, par exemple comprise entre 5% et 25%, et en particulier comprise entre 8% et 18%.

Dans un mode particulièrement préféré, l'huile est une huile paraffinique, comprenant les teneurs respectives :

(i) une teneur totale en composés paraffiniques comprise entre 50% et 90% ;
(ii) une teneur totale en composés naphténiques comprise entre 5% et 25% ; et
(iii) une teneur totale en composés aromatiques comprise entre 5% et 25%.

Dans un mode de réalisation plus particulièrement préféré, l'huile est une huile paraffinique, comprenant les teneurs respectives :

(i) une teneur totale en composés paraffiniques comprise entre 60% et 75% ;
(ii) une teneur totale en composés naphténiques comprise entre 5% et 25% ; et
(iii) une teneur totale en composés aromatiques comprise entre 5% et 25%.

Dans un mode de réalisation encore préféré, l'huile est une huile paraffinique, comprenant les teneurs respectives :

(i) une teneur totale en composés paraffiniques comprise entre 60% et 75% ;
(ii) une teneur totale en composés naphténiques comprise entre 15% et 25% ; et
(iii) une teneur totale en composés aromatiques comprise entre 10% et 15%.

Dans un mode préféré de réalisation de cette variante, les huiles paraffiniques sont issues des coupes de désasphaltage de distillation sous pression réduite (résidu sous vide, RSV) de pétrole brut (ci-après dénommée « huile DAO »). Le principe du désasphaltage repose sur une séparation par précipitation d'un résidu pétrolier en deux phases : i) une phase dite "huile désasphaltée", encore appelée "matrice huile" ou "phase huile" ou DAO (DeAsphalted Oil en anglais) ; et ii) une phase dite "asphalt".

Des huiles répondant aux caractéristiques ci-dessous et utilisables selon l'invention sont obtenues par les procédés de désasphaltage des résidus sous vide (RSV) issus du raffinage du pétrole, par exemple par un désasphaltage à l'aide d'un solvant en C3 à C6, de préférence au propane. Des procédés de désasphaltage sont bien connus de l'homme du métier et sont décrits par exemple dans FR3014111, US 2004/0069685, US 4,305,812 et US 4,455,216 ou dans Lee et al., 2014, Fuel Processing Technology 119 : 204-210.

Dans Lee et al., 2014, Fuel Processing Technology 119 : 204-210, les résidus issus de la distillation sous vide (RSV) sont séparés selon leur masse moléculaire en présence de solvant C3 à C6 (par exemple le propane). L'huile dite DAO ainsi obtenue est riche en paraffine, présente une très faible teneur en asphaltènes, a une température d'évaporation

comprise entre 440°C et 750°C, et une gravité API bien supérieure à celle des résidus sous vide.

La gravité API ou densité API d'une huile (en anglais « API gravity » pour « American Petroleum Institute gravity ») peut être obtenue à partir de la formule (1) suivante :

$$G_{API} = \frac{141,5}{d} - 131,5$$

avec :

- $G_{API}$, la gravité API de l'huile considérée (exprimée sans unité), et
- d, la densité à 16°C (60°F) de l'huile considérée (exprimée sans unité) en prenant l'eau comme référence.

Les teneurs respectives en composés paraffiniques, naphténiques et aromatiques dépendent dans une certaine mesure de la nature du pétrole brut à l'origine de l'huile DAO et du processus de raffinage utilisé. L'homme du métier sait déterminer les teneurs respectives en composés paraffiniques, naphténiques et aromatiques d'une huile DAO par exemple à l'aide de la méthode de fractionnement SARA également décrite dans Lee et al 2014, Fuel Processing Technology 119 : 204-210 et ainsi sélectionner l'huile DAO appropriée pour la préparation de la composition d'huile gélifiée selon l'invention.

Les teneurs en composés paraffiniques, naphténiques et aromatiques mentionnées dans la présente demande sont déterminées selon la norme ASTM D2140, en % en masse par rapport à la masse de l'huile.

Dans un troisième mode de réalisation de l'invention, l'huile hydrocarbonée d'origine pétrolière est un mélange d'huiles aromatiques telles que décrites ci-dessus et d'huiles paraffiniques telles que décrites ci-dessus.

Selon un autre mode de réalisation, le liant peut comprendre en outre une huile d'origine végétale.

Par exemple, les huiles d'origine végétale peuvent être choisies parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges.

Le brai :

Le brai est utilisé de façon optionnelle en mélange avec l'huile dans le liant.

Selon le dictionnaire français, on entend par « brai », un résidu de distillation des goudrons de pétrole, de pétrole, de houille, de bois ou d'autres molécules organiques.

Le brai utilisé dans l'invention est choisi parmi les résidus de distillation du pétrole, également appelés « brai de pétrole ».

Dans la description, on utilisera indépendamment l'un de l'autre, les termes « brai », « brai de pétrole » et « brai de désasphaltage ».

Les brais peuvent être obtenus par des procédés conventionnels de fabrication en raffinerie. Le procédé de fabrication correspond à la succession d'une distillation atmosphérique et d'une distillation sous vide. Dans un premier temps, le pétrole brut est soumis à une distillation à pression atmosphérique, qui conduit à l'obtention d'une phase gazeuse, de différents distillats et d'un résidu de distillat atmosphérique. Puis, le résidu de la distillation atmosphérique est soumis lui-même à une distillation sous pression réduite, appelée distillation sous vide, qui permet de séparer un gazole lourd, diverses coupes de distillats et un résidu de distillation sous vide. Ce résidu de distillation sous vide contient du « brai de pétrole » en concentration variable.

Il est possible d'obtenir le « brai de pétrole » selon deux procédés :

1ère procédé :
Le résidu de distillation sous vide est soumis à une opération de désasphaltage par addition d'un solvant approprié, tel que le propane, qui permet ainsi de précipiter le brai et de le séparer des fractions légères telles que l'huile désasphaltée.

2nd procédé :
Le résidu de distillation sous vide est soumis à une extraction au solvant, et plus précisément au furfural. Cet aldéhyde hétérocyclique présente la particularité de solubiliser sélectivement les composés aromatiques et polycycliques. Ce procédé permet ainsi d'éliminer les extraits aromatiques et de récupérer le « brai de pétrole ».

Selon un mode de réalisation de l'invention, le brai se présente sous forme de granulés avant son introduction dans l'huile chauffée. Un tel mode de réalisation facilite la manipulation des composants et la mise en œuvre du procédé.

Les qualités mécaniques des brais sont généralement appréciées en déterminant une série de caractéristiques

mécaniques par des essais normalisés, dont les plus utilisés sont la pénétrabilité à l'aiguille exprimée en 1/10 mm et le point de ramollissement déterminé par l'essai bille et anneau, encore appelé température de ramollissement bille et anneau (TBA).

Selon un mode de réalisation de l'invention, le brai présente une pénétrabilité à l'aiguille à 25°C de 0 à 20 1/10 mm, de préférence de 5 à 20 1/10 mm, étant entendu que la pénétrabilité est mesurée selon la norme EN 1426.

Selon une première variante, le brai présente un point de ramollissement compris entre 115°C et 175°C. Parmi des exemples de brais utilisés dans l'invention, il y a des brais présentant respectivement un point de ramollissement compris entre 115°C et 125°C, entre 135 et 145°C ou encore entre 165 et 175°C.

Selon un mode de réalisation préféré de cette première variante, le brai est un brai soufflé, également appelé un brai oxydé. Au sens de l'invention, on utilisera indépendamment l'un de l'autre, les termes « brai soufflé » et « brai oxydé ».

De préférence, le brai oxydé utilisé selon l'invention est obtenu par oxydation d'un mélange comprenant du brai et un diluant, tel qu'une essence légère, également appelé « fluxant » soumis à une opération d'oxydation dans une tour de soufflage en présence d'un catalyseur, à une température fixée et à une pression donnée.

Par exemple, les brais oxydés peuvent être fabriqués dans une unité de soufflage, en faisant passer un flux d'air et/ou d'oxygène à travers un brai de départ. Cette opération peut être menée en présence d'un catalyseur d'oxydation, par exemple de l'acide phosphorique. Généralement, l'oxydation est réalisée à des températures élevées, de l'ordre de 200 à 300°C, pendant des durées relativement longues typiquement comprises entre 30 minutes et 2 heures, en continu ou par lots. La durée et la température d'oxydation sont ajustées en fonction des propriétés visées pour le brai oxydé et en fonction de la qualité du brai de départ.

Selon une seconde variante, le brai présente une température de ramollissement bille et anneau (TBA), mesurée selon la norme EN 1427, allant de 55°C à 110°C.

Selon un mode de réalisation préféré de cette seconde variante, le brai est issu d'une opération de désasphaltage par l'addition d'un solvant aliphatique en $C_3$-$C_4$, de préférence directement obtenu après une opération de désasphaltage par l'addition d'un solvant aliphatique en $C_3$-$C_4$.

De préférence, selon ce mode de réalisation préféré, le solvant de désasphaltage est choisi parmi le propane, le butane et leurs mélanges.

L'ajout d'un brai avec les caractéristiques mécaniques présentées ci-dessus dans une huile permet d'obtenir un liant réjuvénant adapté à tout type d'agrégats d'enrobés bitumineux recyclés.

Le liant de l'invention peut être préparé par un procédé comprenant au moins les étapes de :

- Chauffage de l'huile à une température allant de 140 à 180 °C,
- Introduction du brai dans l'huile,
- Agitation du mélange à une température allant de 140 à 180°C jusqu'à l'obtention d'un mélange homogène.

On a constaté que le brai se mélange parfaitement à l'huile.

De façon avantageuse, le brai ne nécessite pas d'être chauffé, avant d'être ajouté à l'huile. Bien que le brai ait habituellement une température de fusion supérieure à 220°C, il se solubilise dans les huiles aux températures habituelles de préparation des liants. Le procédé de fabrication du liant de l'invention est facile à mettre en œuvre et ne nécessite pas de transporter à chaud sur de longues distances le brai destiné à être ajouté à l'huile.

Selon un mode de réalisation de l'invention, le brai est utilisé sous forme solide à froid et divisée, de préférence sous forme de granules, dans le procédé de production des liants. Cette forme facilite la manipulation du brai pour sa mise en œuvre dans la fabrication du liant de l'invention.

On entend par brai solide à froid et sous forme divisée, un brai solide à température ambiante qui est conditionné sous une forme divisée, c'est-à-dire sous forme d'unités distinctes les unes des autres, par exemple des granules.

Les granules de brai peuvent avoir au sein d'une même population de granules, une ou plusieurs formes choisies parmi une forme cylindrique, sphérique ou ovoïde. Plus précisément, les granules de brai ont de préférence une forme cylindrique ou sphérique ou encore demi-sphérique.

Avantageusement, la taille des granules de brai est telle que la dimension moyenne la plus longue est de préférence inférieure ou égale à 50 mm, plus préférentiellement de 2 à 30 mm. Par exemple, l'utilisation d'une filière permet de contrôler la fabrication de granules d'une taille choisie. Un tamisage permet de sélectionner des granules en fonction de leur taille.

Pour permettre la formation de granules de brai qui n'adhèrent pas entre elles et résistent à la compression lors de leur stockage, il peut être avantageux d'utiliser des granules de brai enrobés en tout ou partie de leur surface par un composé anti-agglomérant. Le brai, sous forme de granulés éventuellement recouvert par un composé anti-agglomérant, est facilement manipulable après une durée de transport et/ou de stockage prolongée. Le composé anti-agglomérant se retrouve alors dans la composition formant le cœur des granules.

Le composé organogélateur

Le liant solide à température ambiante et sous forme divisée selon l'invention comprend au moins un additif chimique choisi parmi les composés organogélateurs.

En particulier, le liant solide à température ambiante et sous forme divisée comprend au moins un additif chimique organogélateur en quantité adaptée pour que cette composition soit solide à température ambiante et sous forme divisée.

Dans un mode de réalisation de l'invention, l'additif chimique organogélateur est un composé organique. Avantageusement, le composé organogélateur présente une masse molaire inférieure ou égale à 2000 $gmol^{-1}$, de préférence une masse molaire inférieure ou égale à 1000 $gmol^{-1}$.

Dans ce premier mode de réalisation, selon une première variante, le composé organogélateur est un composé de formule générale (I) :

Ar1-R-Ar2 (I),

dans laquelle :

- Ar1 et Ar2 représentent indépendamment l'un de l'autre un noyau benzène ou un système de noyaux aromatiques condensés de 6 à 20 atomes de carbones, substitués par au moins un groupe hydroxyle et éventuellement substitués par un ou plusieurs groupements alkyles en $C_1$-$C_{20}$, et
- R représente un radical divalent éventuellement substitué, dont la chaîne principale comprend de 6 à 20 atomes de carbone et au moins un groupe choisi parmi les fonctions amide, ester, hydrazide, urée, carbamate, anhydride.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-tert-butyl-4-hydroxyphényle.

De préférence, R est en position *para* par rapport à un groupe hydroxyle de Ar1 et/ou Ar2.

On peut citer comme exemple de composé de formule (I) le 2',3-bis[(3-[3, 5-di-*tert*-butyl-4-hydroxyphenyl] propionyl)]propionohydrazide.

Selon une seconde variante de ce mode de réalisation, le composé organogélateur est un composé de formule générale (II) :

$R\text{-}(NH)_nCONH\text{-}(X)_m\text{-}(NHCO)_p(NH)_n\text{-}R'$ (II),

dans laquelle,

- les groupements R et R', identiques ou différents, représentent une chaîne hydrocarbonée saturée ou insaturée, linéaire, ramifiée ou cyclique, comprenant de 1 à 22 atomes de carbone, éventuellement substituée par un ou plusieurs groupes hydroxyles ou groupes amines, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S, et R' peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- n, m et p sont des entiers ayant une valeur de 0 ou 1 indépendamment les uns des autres.

Selon cette variante, lorsque l'entier m a une valeur de 0 et lorsque l'entier p a une valeur de 1, alors les groupements $R\text{-}(NH)_nCONH$ et $NHCO(NH)_n\text{-}R'$ sont liés de façon covalente et forment ensemble une liaison hydrazide CONH-NHCO. Le groupement R, ou le groupement R', représente alors au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

Toujours selon cette variante, lorsque l'entier m a une valeur de 1, alors le groupement R, le groupement R' et/ou le groupement X, représentent au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

De préférence, le groupement R et/ou le groupement R' représentent une chaîne hydrocarbonée aliphatique de 4 à 22 atomes de carbone, notamment, choisie parmi les groupements $C_4H_9$, $C_5H_{11}$, $C_9H_{19}$, $C_{11}H_{23}$, $C_{12}H_{25}$, $C_{17}H_{35}$,

$C_{18}H_{37}$, $C_{21}H_{43}$, $C_{22}H_{45}$.

Selon un premier mode de réalisation préféré, le groupement X représente une chaîne hydrocarbonée linéaire, saturée comprenant de 1 à 22 atomes de carbone, avantageusement de 1 à 12 atomes de carbone, encore mieux de 1 à 10 atomes de carbone. De préférence, le groupement X est choisi parmi les groupements $C_2H_4$, $C_3H_6$.

Selon un second mode de réalisation préféré, le groupement X peut aussi être un groupement cyclohexyl ou un groupement phényl, les radicaux R-$(NH)_n$CONH- et - NHCO$(NH)_n$-R' peuvent alors être en position ortho, méta ou para. Par ailleurs, les radicaux R-$(NH)_n$CONH- et -NHCO$(NH)_n$-R' peuvent être en position cis ou trans l'un par rapport à l'autre. De plus, lorsque le radical X est cyclique, ce cycle peut être substitué par d'autres groupements que les deux groupements principaux R-$(NH)_n$CONH- et -NHCO$(NH)_n$-R'.

Selon un troisième mode de réalisation préféré, le groupement X représente deux cycles de 6 carbones, éventuellement substitués, reliés par un groupement $CH_2$, ces cycles étant aliphatiques ou aromatiques. Dans ce cas, le groupement X est par exemple

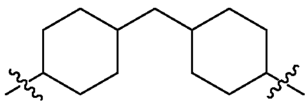
, ou
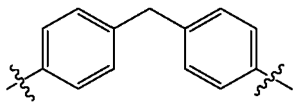

Avantageusement, selon cette variante, le composé organogélateur est un composé de formule générale (II) choisi parmi les dérivés hydrazides tels que les composés $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, ou $C_{21}H_{43}$-CONH-NHCO-$C_{21}H_{43}$ ; les diamides telles que le N,N'-éthylènedi(laurylamide) de formule $C_{11}H_{23}$-CONH-$CH_2$-$CH_2$-NHCO-$C_{11}H_{31}$, le N,N'-éthylènedi(myristylamide) de formule $C_{13}H_{27}$-CONH-$CH_2$-$CH_2$-NHCO-$C_{13}H_{27}$, le N,N'-éthylènedi(palmitamide) de formule $C_{15}H_{31}$-CONH-$CH_2$-$CH_2$-NHCO-$C_{15}H_{31}$, le N,N'-éthylènedi(stéaramide) de formule $C_{17}H_{35}$-CONH-$CH_2$-$CH_2$-NHCO-$C_{17}H_{35}$ ; et les dérivés uréides tels que la 4,4'-bis(dodécylaminocarbonylamino)diphénylmethane de formule $C_{12}H_{25}$-NHCONH-$C_6H_4$-$CH_2$-$C_6H_4$-NHCONH-$C_{12}H_{25}$.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R, X et R' est supérieur ou égal à 10, avantageusement supérieur ou égal à 14, de préférence supérieur ou égal à 18.

De préférence, le composé de formule générale (II) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

De préférence, selon une première variante, le composé de formule générale (II) est choisi parmi ceux de formule (IIA) :

R-CONH-$(X)_m$-NHCO-R' (IIA)

dans laquelle R, R', m et X ont la même définition que ci-dessus.

De préférence, dans la formule (IIA) lorsque m= 1, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements $C_2H_4$, $C_3H_6$.

De préférence, le composé de formule générale (IIA) est choisi parmi ceux qui satisfont à la condition : la somme des nombres des atomes de carbone de R, X et R' est supérieur ou égal à 10, avantageusement supérieur ou égal à 14, de préférence supérieur ou égal à 18.

De préférence, le composé de formule générale (IIA) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

Plus préférentiellement, selon cette variante, le composé de formule générale (IIA) est choisi parmi les dérivés hydrazides tels que les composés $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, ou $C_{21}H_{43}$-CONH-NHCO-$C_{21}H_{43}$; les diamides telles que le N,N'-éthylènedi(laurylamide) de formule $C_{11}H_{23}$-CONH-$CH_2$-$CH_2$-NHCO-$C_{11}H_{31}$, le N,N'-éthylènedi(myristylamide) de formule $C_{13}H_{27}$-CONH-$CH_2$-$CH_2$-NHCO-$C_{13}H_{27}$, le N,N'-éthylènedi(palmitamide) de formule $C_{15}H_{31}$-CONH-$CH_2$-$CH_2$-NHCO-$C_{15}H_{31}$, le N,N'-éthylènedi(stéaramide) de formule $C_{17}H_{35}$-CONH-$CH_2$-$CH_2$-NHCO-$C_{17}H_{35}$ ; les mono amides telles que le laurylamide de formule $C_{11}H_{23}$-$CONH_2$, le myristylamide de formule $C_{13}H_{27}$-$CONH_2$, le palmitamide de formule $C_{15}H_{31}$-$CONH_2$, le stéaramide de formule $C_{17}H_{35}$-$CONH_2$.

De façon encore plus avantageuse, le composé de formule générale (IIA) est le N,N'-éthylènedi(stéaramide) de formule

$C_{17}H_{35}$-CONH-$CH_2$-$CH_2$-NHCO-$C_{17}H_{35}$.

De préférence, selon une seconde variante, le composé de formule générale (II) est choisi parmi ceux de formule (IIB) :

R-CONH-R' (IIB)

dans laquelle R et R' ont la même définition que ci-dessus.

Avantageusement, selon cette variante, la somme des nombres des atomes de carbone de R et R' est supérieur ou égal à 10, avantageusement supérieur ou égal à 14, de préférence supérieur ou égal à 18.

Encore plus avantageusement, selon cette variante, le nombre des atomes de carbone de R est supérieur ou égal à 10, avantageusement supérieur ou égal à 12, de préférence supérieur ou égal à 14, et R' = H.

Avantageusement, le composé de formule générale (II) est choisi parmi les dérivés hydrazides tels que les composés $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, ou $C_{21}H_{43}$-CONH-NHCO-$C_{21}H_{43}$; les diamides telles que le N,N'-éthylènedi(laurylamide) de formule $C_{11}H_{23}$-CONH-$CH_2$-$CH_2$-NHCO-$C_{11}H_{31}$, le N,N'-éthylènedi(myristylamide) de formule $C_{13}H_{27}$-CONH-$CH_2$-$CH_2$-NHCO-$C_{13}H_{27}$, le N,N'-éthylènedi(palmitamide) de formule $C_{15}H_{31}$-CONH-$CH_2$-$CH_2$-NHCO-$C_{15}H_{31}$, leN,N'-éthylènedi(stéaramide) de formule $C_{17}H_{35}$-CONH-$CH_2$-$CH_2$-NHCO-$C_{17}H_{35}$ ; les mono amides telles que le laurylamide de formule $C_{11}H_{23}$-$CONH_2$, le myristylamide de formule $C_{13}H_{27}$-$CONH_2$, le palmitamide de formule $C_{15}H_{31}$-$CONH_2$, le stéaramide de formule $C_{17}H_{35}$-$CONH_2$.

De façon encore plus avantageuse, le composé de formule générale (II) est le N,N'-éthylènedi(stéaramide) de formule $C_{17}H_{35}$-CONH-$CH_2$-$CH_2$-NHCO-$C_{17}H_{35}$.

De préférence, lorsque l'additif chimique est choisi parmi les composés organiques de formule (II), il est utilisé en combinaison avec au moins un autre additif chimique choisi parmi les composés organiques de formule (I), (III), (V), (VI) et (VII) et/ou les produits de réaction d'au moins un polyol en C3-C12 et d'au moins un aldéhyde en C2-C12, notamment ceux comprenant un groupement de formule (IV).

Selon une troisième variante, le composé organogélateur est un composé de formule (III) :

$(R\text{-}NHCO)_x\text{-}Z\text{-}(NHCO\text{-}R')_y$ (III),

dans laquelle,

- R et R', identiques ou différents, représentent une chaîne hydrocarbonée saturée ou insaturée, linéaire, ramifiée ou cyclique comprenant de 1 à 22 atomes de carbone, éventuellement substituée, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S,
- Z représente un groupement tri-fonctionnalisé choisi parmi les groupements suivants :

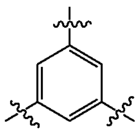
$Z_1$

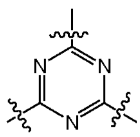
$Z_2$

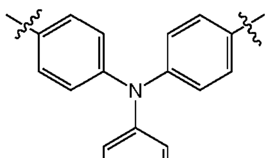
$Z_3$

- x et y sont des entiers différents de valeur variant de 0 à 3 et tels que x+y=3.

De préférence, lorsque x est égal à 0 et Z représente $Z_2$, le composé de formule (III) est la N2, N4, N6-tridécylmélamine ayant la formule suivante avec R' représentant le groupe $C_9H_{19}$ :

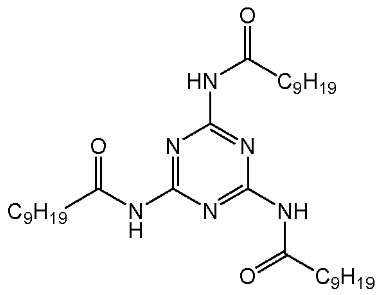

D'autres composés préférés répondant à la formule (III), sont tels que x est égal à 0, Z représente $Z_2$ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente $Z_1$, les composés ont alors pour formule :

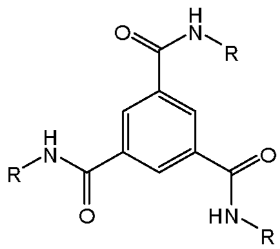

avec R choisi parmi les groupes suivants, pris seuls ou en mélanges :

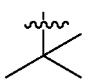 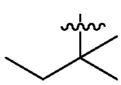 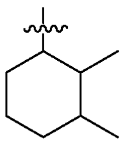 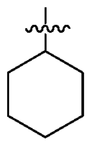 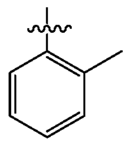

D'autres composés préférés répondant à la formule (III) sont tels que : y est égal à 0, Z représente $Z_1$ et R représente une chaîne hydrocarbonée saturée, linéaire, de 1 à 22 atomes de carbone, de préférence de 8 à 12 atomes de carbone.

Selon une quatrième variante, le composé organogélateur est un produit de réaction d'au moins un polyol en $C_3$-$C_{12}$ et d'au moins un aldéhyde en $C_2$-$C_{12}$. Parmi les polyols utilisables, on peut citer le sorbitol, le xylitol, le mannitol et/ou le ribitol. De préférence, le polyol est le sorbitol.

Avantageusement, selon cette variante, le composé organogélateur est un composé qui comprend au moins une fonction de formule générale (IV) :

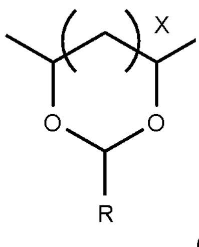

(IV)

avec :

- x est un entier,
- R est choisi parmi un radical alkyle en $C_1$-$C_{12}$, alcényle en $C_2$-$C_{12}$, aryle en $C_6$-$C_{12}$, ou aralkyle en $C_7$-$C_{12}$, éventuellement substitué par un ou plusieurs atomes d'halogène, un ou plusieurs groupements alcoxy en $C_1$-$C_6$.

Selon cette variante, le composé organogélateur est avantageusement un dérivé du sorbitol. Par « dérivé du

sorbitol », on entend tout produit de réaction, obtenu à partir du sorbitol. En particulier, tout produit de réaction obtenu en faisant réagir un aldéhyde avec du D-sorbitol. On obtient par cette réaction de condensation, des acétals de sorbitol, qui sont des dérivés du sorbitol. Le 1,3:2,4-Di-O-benzylidène-D-sorbitol est obtenu en faisant réagir 1 mole de D-sorbitol et 2 moles de benzaldéhyde et a pour formule :

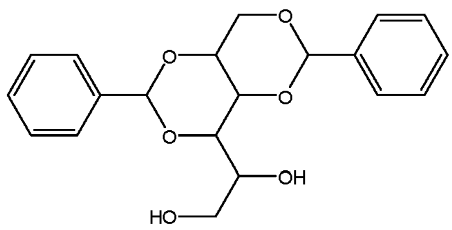

Les dérivés du sorbitol pourront ainsi être tous les produits de condensation d'aldéhydes, notamment d'aldéhydes aromatiques avec le sorbitol. On obtiendra alors des dérivés du sorbitol de formule générale :

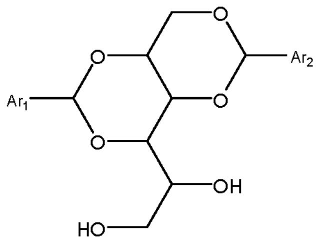

où $Ar_1$ et $Ar_2$ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol. De préférence, selon cette variante, le composé organogélateur est le 1,3:2,4-Di-O-benzylidene-D-sorbitol.

Selon une cinquième variante, le composé organogélateur est un composé de formule générale (V) :

$$R''\text{-}(COOH)_z \qquad (V),$$

dans laquelle R'' représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R'' est une chaîne linéaire saturée de formule $C_wH_{2w}$ avec w un entier variant de 4 à 22, de préférence de 4 à 12.

Selon cette variante de l'invention, les composés organogélateurs répondant à la formule (V) peuvent être des diacides (z = 2), des triacides (z = 3) ou des tétracides (z = 4). Les composés organogélateurs préférés selon cette variante, sont des diacides avec z = 2.

De préférence, selon cette variante, les diacides (V) ont pour formule générale $HOOC\text{-}C_wH_{2w}\text{-}COOH$ avec w un entier variant de 4 à 22, de préférence de 4 à 12.

Avantageusement, selon cette variante, le composé organogélateur est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12. Plus avantageusement, le composé organogélateur est l'acide sébacique ou acide 1,10-décanedioïque avec w = 8.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple).

De préférence, on dimérise un seul type d'acide gras insaturé. Ils dérivent en particulier de la dimérisation d'un acide gras insaturé notamment en $C_8$ à $C_{34}$, notamment en $C_{12}$ à $C_{22}$, en particulier en $C_{16}$ à $C_{20}$, et plus particulièrement en $C_{18}$. Un dimère d'acide gras préféré est obtenu par dimérisation de l'acide linoléïque, celui-ci pouvant ensuite être partiellement ou totalement hydrogéné.

Un autre dimère d'acide gras préféré a pour formule $HOOC-(CH_2)_7-CH=CH-(CH_2)_7-COOH$. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon une sixième variante, le composé organogélateur est un composé de formule générale (VI) :

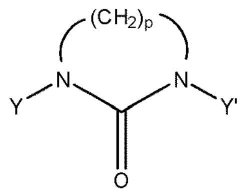

dans laquelle,

- les groupements Y et Y' représentent indépendamment l'un de l'autre, un atome ou groupement choisi parmi : H, $-(CH_2)_q-CH_3$, $-(CH_2)_q-NH_2$, $-(CH_2)_q-OH$, $-(CH_2)_q-COOH$ ou

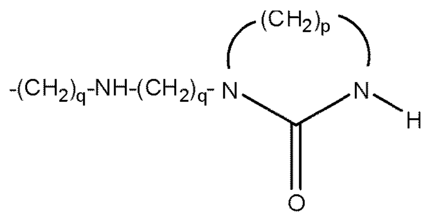

avec q un entier variant de 2 à 18, de préférence de 2 à 10, de préférence de 2 à 4 et p un entier supérieur ou égal à 2, de préférence ayant une valeur de 2 ou 3.

Parmi les composés organogélateurs préférés répondant à la formule (VI), on peut citer les composés suivants :

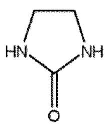
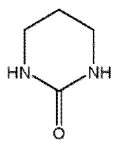
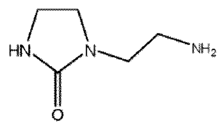

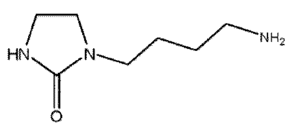
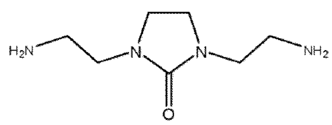

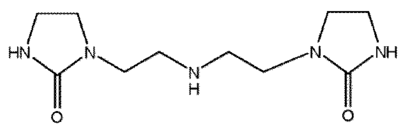

De préférence, selon cette variante, le composé organogélateur de formule générale (VI) est :

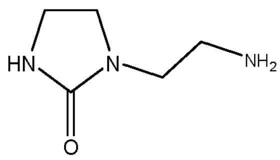

Selon une septième variante de ce mode de réalisation, le composé organogélateur est un composé de formule générale (VII) :

R-NH-CO-CO-NH-R' (VII)

dans laquelle, R et R', identiques ou différents, représentent une chaîne hydrocarbonée saturée ou insaturée, linéaire, ramifiée ou cyclique, comprenant de 1 à 22 atomes de carbone, de préférence de 8 à 12 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S.

On ne sortira pas du cadre de l'invention en combinant plusieurs additifs chimiques différents tels que différents composés organogélateurs de formule (I), (II), (III), (V), (VI) et (VII), les produits de réaction d'au moins un polyol en $C_3$-$C_{12}$ et d'au moins un aldéhyde en $C_2$-$C_{12}$, notamment ceux comprenant un groupement de formule (IV), dans le liant.

Avantageusement, le liant comprend au moins un additif organogélateur choisi parmi les composés de formule (I), les composés de formule (II) et les composés de formule (V).

Plus avantageusement, le liant comprend au moins un additif organogélateur choisi parmi les composés de formule (I) ou les composés de formule (II).

De préférence, le liant comprend un additif organogélateur dans laquelle l'additif est le 2',3-bis[(3-[3, 5-di-*tert*-butyl-4-hydroxyphenyl]propionyl)]propionohydrazide.

Selon un mode de réalisation avantageux, le liant selon l'invention comprend au moins deux composés organogélateurs.

Selon une première variante de ce mode de réalisation, le liant selon l'invention comprend au moins un premier composé organogélateur de formule (V) et au moins un second composé organogélateur choisi parmi : les composés organogélateurs de formule (I) ; les composés organogélateurs de formule (II) ; les composés organogélateurs de formule (III) ; les composés organogélateurs de formule (V) ; les composés organogélateurs de formule (VI) ; les composés organogélateurs de formule (VII) et les produits de réaction d'au moins un polyol en $C_3$-$C_{12}$ et d'au moins un aldéhyde en $C_2$-$C_{12}$, notamment ceux comprenant un groupement de formule (IV), le second composé organogélateur étant distinct du premier composé organogélateur.

De préférence, et selon cette première variante, le liant selon l'invention comprend au moins un premier composé organogélateur de formule (V) et au moins un second composé organogélateur choisi parmi : les composés organogélateurs de formule (I) et les composés organogélateurs de formule (II).

Lorsque le second composé organogélateur est choisi parmi les composés organogélateurs de formule (II), il est de préférence choisi parmi les composés organogélateurs de formule (IIA).

De préférence, et toujours selon cette première variante, le premier composé organogélateur de formule (V) est choisi parmi les diacides (z=2), les triacides (z=3) et les tétracides (z=4), de préférence parmi les diacides (z=2).

Plus préférentiellement, et toujours selon cette première variante, le premier composé organogélateur de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et selon cette première variante, le premier composé organogélateur de formule (V) est l'acide sébacique ou acide 1,10-décanedioïque avec w = 8.

Selon une seconde variante de ce mode réalisation, le liant selon l'invention comprend au moins un premier composé organogélateur de formule (II) et au moins un second composé organogélateur choisi parmi : les composés organogélateurs de formule (I) ; les composés organogélateurs de formule (II) ; les composés organogélateurs de formule (III) ; les composés organogélateurs de formule (V) ; les composés organogélateurs de formule (VI) ; les composés organogélateurs de formule (VII) et les produits de réaction d'au moins un polyol en $C_3$-$C_{12}$ et d'au moins un aldéhyde en $C_2$-$C_{12}$, notamment ceux comprenant un groupement de formule (IV), le second composé organogélateur étant distinct du premier composé organogélateur.

De préférence, et selon cette seconde variante, le premier composé organogélateur de formule (II) est choisi parmi les composés organogélateurs de formule (IIA).

Plus préférentiellement, et selon cette seconde variante, le liant selon l'invention comprend au moins un premier composé organogélateur de formule (IIA) et au moins un second composé organogélateur choisi parmi : les composés

organogélateurs de formule (I) ; les composés organogélateurs de formule (IIB) ; les composés organogélateurs de formule (III) ; les composés organogélateurs de formule (V) ; les composés organogélateurs de formule (VI) ; les composés organogélateurs de formule (VII) et les produits de réaction d'au moins un polyol en $C_3$-$C_{12}$ et d'au moins un aldéhyde en $C_2$-$C_{12}$, notamment ceux comprenant un groupement de formule (IV), le second composé organogélateur étant distinct du premier composé organogélateur.

Encore plus préférentiellement, et selon cette seconde variante, le liant selon l'invention comprend au moins un premier composé organogélateur de formule (IIA) et au moins un second composé organogélateur choisi parmi : les composés organogélateurs de formule (I) et les composés organogélateurs de formule (V).

De préférence, et selon cette seconde variante, le premier composé organogélateur de formule (II) est le N,N'-éthylènedi(stéaramide).

Lorsque le second composé organogélateur est choisi parmi les composés organogélateurs de formule (V), il est de préférence choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Selon une troisième variante préférée de ce mode de réalisation, le liant selon l'invention comprend au moins de l'acide sébacique ou acide 1,10-décanedioïque et au moins du N,N'-éthylènedi(stéaramide).

Selon une quatrième variante de ce mode de réalisation, le liant selon l'invention comprend au moins un premier composé organogélateur de formule (I) et au moins un second composé organogélateur choisi parmi : les composés organogélateurs de formule (I) ; les composés organogélateurs de formule (II) ; les composés organogélateurs de formule (III) ; les composés organogélateurs de formule (V) ; les composés organogélateurs de formule (VI) ; les composés organogélateurs de formule (VII) et les produits de réaction d'au moins un polyol en $C_3$-$C_{12}$ et d'au moins un aldéhyde en $C_2$-$C_{12}$, notamment ceux comprenant un groupement de formule (IV), le second composé organogélateur étant distinct du premier composé organogélateur.

De préférence, et selon cette quatrième variante, le second composé organogélateur est choisi parmi les composés organogélateurs de formule (II) et les composés organogélateurs de formule (V).

De préférence, et selon cette quatrième variante, lorsque le second composé organogélateur est choisi parmi les composés organogélateurs de formule (II), il est choisi parmi les composés organogélateurs de formule (IIA).

Plus préférentiellement, et selon cette quatrième variante, le second composé organogélateur de formule (II) est le N,N'-éthylènedi(stéaramide).

De préférence, et toujours selon cette quatrième variante, lorsque le second composé organogélateur est choisi parmi les composés organogélateurs de formule (V), il est choisi parmi les diacides (z=2), les triacides (z=3) et les tétracides (z=4), de préférence parmi les diacides (z=2).

Encore plus préférentiellement, et toujours selon cette quatrième variante, le second composé organogélateur de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et toujours selon cette quatrième variante, le second composé organogélateur de formule (V) est l'acide sébacique ou acide 1,10-décanedioïque.

De préférence, et selon cette quatrième variante, le premier composé organogélateur de formule (I) est le 2',3-bis [(3-[3, 5-di-tert-butyl-4-hydroxyphenyl]propionyl)]propionohydrazide.

De préférence, et selon ce mode de réalisation, le ratio massique du premier composé organogélateur par rapport au second composé organogélateur est de 1 :99 à 99 :1, de préférence de 1 :9 à 9 :1, encore plus préférentiellement de 1 :5 à 5 :1.

Avantageusement, le liant comprend de 0,1 % à 10 % en masse, de préférence de 0,2 % à 5 % en masse, plus préférentiellement de 0,5 % à 3,5 % en masse de composé organogélateur par rapport à la masse totale du liant.

<u>Liant solide à température ambiante et sous forme divisée</u>

Le liant est solide à température ambiante et sous forme divisée. Il comprend l'huile, éventuellement le brai et le ou les additifs organogélateurs et le cas échéant d'autres additifs.

Selon un premier mode de réalisation, le liant ne comprend pas de brai :

Avantageusement, selon ce mode de réalisation, le liant comprend, ou est essentiellement composé de :

- 80 % à 99,9 % en masse d'au moins une huile choisie parmi : les huiles hydrocarbonées d'origine pétrolière ou synthétique,
- 0,1 % à 10 % en masse, d'au moins un additif chimique organogélateur,

- 0 % à 10 % en masse d'un ou plusieurs autres additifs,

par rapport à la masse totale du liant.

De préférence, le liant comprend, ou est essentiellement composé de :

- 85 % à 99,8 % en masse d'au moins une huile, choisie parmi : les huiles hydrocarbonées d'origine pétrolière ou synthétique,
- 0,2 % à 5 % en masse, d'au moins un additif chimique organogélateur,
- 0 % à 10 % en masse d'un ou plusieurs autres additifs,

par rapport à la masse totale du liant.

Plus préférentiellement, le liant comprend, ou est essentiellement composé de :

- 86,5 % à 99,5 % en masse d'au moins une huile choisie parmi : les huiles hydrocarbonées d'origine pétrolière ou synthétique,
- 0,5 % à 3,5 % en masse d'au moins un additif chimique organogélateur,
- 0 % à 10 % en masse d'un ou plusieurs autres additifs par rapport à la masse totale du liant.

Selon une variante préférée, le composé organogélateur est choisi parmi ceux répondant à la formule (I), notamment le 2',3-bis[(3-[3, 5-di-tert-butyl-4-hydroxyphenyl]propionyl)]propionohydrazide.

Avantageusement, le liant comprend, ou est essentiellement composé de :

- 85 % à 99,9 % en masse d'au moins une huile hydrocarbonée d'origine pétrolière,
- 0,1 % à 5 % en masse d'au moins un additif chimique organogélateur de formule (I), avantageusement le 2',3-bis [(3-[3, 5-di-tert-butyl-4-hydroxyphenyl]propionyl)]propionohydrazide,
- 0 % à 10 % en masse d'un ou plusieurs autres additifs,

par rapport à la masse totale du liant.

De préférence, le liant comprend, ou est essentiellement composé de :

- 86,5 % à 99,8 % en masse d'au moins une huile hydrocarbonée d'origine pétrolière,
- 0,2 % à 3,5 % en masse, d'au moins un additif chimique organogélateur de formule (I), avantageusement le 2',3-bis [(3-[3, 5-di-tert-butyl-4-hydroxyphenyl]propionyl)]propionohydrazide,
- 0 % à 10 % en masse d'un ou plusieurs autres additifs,

par rapport à la masse totale du liant.

Selon un second mode de réalisation, la composition comprend du brai :
Avantageusement, selon ce mode de réalisation, le liant comprend, ou est essentiellement composé de :

- 90 % à 10 % en masse d'au moins une huile choisie parmi : les huiles hydrocarbonées d'origine pétrolière ou synthétique,
- 10 % à 90 % en masse d'au moins un brai
- 0,1 % à 10 % en masse, d'au moins un additif chimique organogélateur,
- 0 % à 10 % en masse d'un ou plusieurs autres additifs,

par rapport à la masse totale du liant.

De préférence, le liant comprend, ou est essentiellement composé de :

- 10 % à 70 % en masse d'au moins une huile, choisie parmi : les huiles hydrocarbonées d'origine pétrolière ou synthétique,
- 90 % à 30 % en masse d'au moins un brai,
- 0,2 % à 5 % en masse, d'au moins un additif chimique organogélateur,
- 0 % à 10 % en masse d'un ou plusieurs autres additifs,

par rapport à la masse totale du liant.

Plus préférentiellement, le liant comprend, ou est essentiellement composé de :

- 15 % à 50 % en masse d'au moins une huile choisie parmi : les huiles hydrocarbonées d'origine pétrolière ou

synthétique,

- 50 % à 85 % en masse d'au moins un brai,
- 0,5 % à 3,5 % en masse d'au moins un additif chimique organogélateur,
- 0 % à 10 % en masse d'un ou plusieurs autres additifs par rapport à la masse totale du liant.

Selon une variante préférée, le composé organogélateur est choisi parmi ceux répondant à la formule (I), notamment le 2',3-bis[(3-[3, 5-di-tert-butyl-4-hydroxyphenyl]propionyl)]propionohydrazide.

Avantageusement selon cette variante, le liant comprend, ou est essentiellement composé de :

- 10 % à 70 % en masse d'au moins une huile hydrocarbonée d'origine pétrolière,
- 30 % à 90 % en masse d'au moins un brai,
- 0,1 % à 5 % en masse d'au moins un additif chimique organogélateur de formule (I), avantageusement le 2',3-bis [(3-[3, 5-di-tert-butyl-4-hydroxyphenyl]propionyl)]propionohydrazide,
- 0 % à 10 % en masse d'un ou plusieurs autres additifs,

par rapport à la masse totale du liant.

De préférence, le liant comprend, ou est essentiellement composé de :

- 15 % à 50 % en masse d'au moins une huile hydrocarbonée d'origine pétrolière,
- 50 % à 85 % en masse d'au moins un brai
- 0,2 % à 3,5 % en masse, d'au moins un additif chimique organogélateur de formule (I), avantageusement le 2',3-bis [(3-[3, 5-di-tert-butyl-4-hydroxyphenyl]propionyl)]propionohydrazide,
- 0 % à 10 % en masse d'un ou plusieurs autres additifs,

par rapport à la masse totale du liant.

Autres additifs

Selon une variante de l'invention, on peut prévoir d'incorporer au liant toutes sortes d'additifs habituellement utilisés pour la formulation, en fonction de l'application visée, dès lors que ces additifs ne gênent pas la solidification de la composition de liant.

La quantité d'additif dans le liant est calculée en fonction de la quantité d'huile et de brai qui sera mise en œuvre pour l'application visée et de la quantité d'additif attendue dans cette application. Habituellement, les additifs sont incorporés en quantités allant de 0,1 à 10% en masse par rapport à la masse totale du liant.

Procédé de préparation du liant solide

Les liants solides à température ambiante selon l'invention peuvent être préparés par exemple selon le procédé suivant comprenant les étapes de :

(i) Mélange de l'huile, par exemple l'huile DAO ou RAE, et chauffage à une température comprise entre 140-200°C, par exemple de 10 minutes à 30 minutes,
(ii) Eventuellement, introduction du brai dans l'huile, et agitation du mélange à une température allant de 140 à 180°C jusqu'à l'obtention d'un mélange homogène,
(iii) Ajout du composé organogélateur, mélange et chauffage à une température comprise entre 140-200°C, par exemple de 30 minutes à 2 heures,
(iv) Ajout éventuel d'un ou de plusieurs autres additifs, mélange et chauffage à une température comprise entre 140-200°C, par exemple, de 5 minutes à 20 minutes,
(v) Mise en forme du liant, par exemple sous forme de granules ou de pains,
(vi) Refroidissement à température ambiante.

L'ordre des étapes (i) à (iv) peut être modifié.

Granules de liant solide à température ambiante

Au sens de l'invention, le terme « granules de liant » peut également être défini comme un liant solide à température ambiante conditionnée sous une forme divisée, c'est-à-dire sous forme d'unités de petite taille nommées balles, granules ou particules.

Les granules de liant selon l'invention sont obtenus par mise en forme d'un liant tel que décrit ci-dessus selon tout procédé connu, par exemple selon le procédé de fabrication décrit dans le document US 3 026 568, le document WO 2009/153324 ou le document WO 2012/168380. Selon un mode de réalisation particulier, la mise en forme des granules peut être réalisée par égouttage, en particulier à l'aide d'un tambour.

D'autres techniques peuvent être utilisées dans le procédé de fabrication des granules de liant solide à température ambiante selon l'invention, en particulier le moulage, l'extrusion...

De préférence, les granules de liant selon l'invention peuvent avoir au sein d'une même population de granules, une ou plusieurs formes choisies parmi une forme cylindrique, sphérique ou ovoïde. La taille des granules de liant selon l'invention est telle que la dimension moyenne la plus longue est de préférence inférieure ou égale à 50 mm, plus préférentiellement de 3 à 30 mm, encore plus préférentiellement comprise de 5 à 20 mm. La taille et la forme des granules de liant solide à température ambiante peuvent varier selon le procédé de fabrication employé. Par exemple, l'utilisation d'une filière permet de contrôler la fabrication de granules d'une taille choisie. Un tamisage permet de sélectionner des granules en fonction de leur taille.

Les granules de liant sont, de préférence, transportés et/ou stockés en vrac dans des sacs de 1 kg à 30 kg ou de 500 kg à 1000 kg couramment appelés des « Big Bag », lesdits sacs étant de préférence en matériau thermofusible ou dans des cartons de 5 kg à 30 kg ou dans des fûts de 100 kg à 200 kg.

Selon un mode de réalisation de l'invention, les granules de liant selon l'invention sont recouverts sur au moins une partie de leur surface d'un anti-agglomérant, de préférence sur l'ensemble de leur surface.

Pain de liant solide à température ambiante

Selon un mode de réalisation de l'invention, le liant solide à température ambiante et sous forme divisée est sous forme de pain. Au sens de l'invention, le liant sous forme de pain est également appelé « pain de liant ».

On entend par pain de liant solide à température ambiante, un bloc de liant selon l'invention ayant une masse comprise entre 1 kg et 1000 kg, de préférence, entre 1 kg et 200 kg, plus préférentiellement entre 1 kg et 50 kg, encore plus préférentiellement entre 5 kg et 25 kg, encore plus préférentiellement entre 10 kg et 30 kg, ledit bloc étant avantageusement parallélépipédique, de préférence étant un pavé.

Le pain de liant selon l'invention a, de préférence, un volume compris entre 1000 $cm^3$ et 50000 $cm^3$, de préférence entre 5000 $cm^3$ et 25000 $cm^3$, plus préférentiellement entre 10000 $cm^3$ et 30000 $cm^3$, encore plus préférentiellement entre 14000 $cm^3$ et 25000 $cm^3$.

Lorsque le pain de liant selon l'invention est manipulé manuellement par une personne, la masse du pain d'huile peut varier de 1 à 20 kg, et de 20 à 50 kg dans le cas d'une manutention par deux personnes. Lorsque la manutention est réalisée par des équipements mécaniques, la masse du pain de liant selon l'invention peut varier de 50 à 1000 kg.

Le pain de liant selon l'invention est fabriqué à partir du liant tel que décrit ci-dessus selon tout procédé connu industriellement, par exemple par extrusion, par moulage, ou selon le procédé de fabrication décrit dans le document US2011/0290695.

Le pain de liant selon l'invention est avantageusement emballé d'un film thermofusible selon tout procédé connu, de préférence par un film en polypropylène, polyéthylène ou un mélange de polyéthylène et polypropylène. Le liant selon l'invention conditionné en pain emballé d'un film thermofusible présente l'avantage d'être prêt à l'emploi c'est-à-dire qu'il peut être directement chauffé dans le fondoir sans déballage préalable, par exemple pour la fabrication de nouveaux enrobés bitumeux obtenus à partir d'agrégats d'enrobés bitumineux recyclés. Le matériau thermofusible qui fond avec le liant selon l'invention n'affecte pas les propriétés dudit liant.

Le pain de liant selon l'invention peut également être recouvert de composé anti-agglomérant tel que défini ci-dessous.

Dans cette variante, les préférences, les avantages, les différents modes de réalisation décrits pour les composés anti-agglomérant s'appliquent également.

Le pain de liant selon l'invention peut également être conditionné dans un carton selon tout procédé connu.

En particulier, le pain de liant selon l'invention est conditionné dans un carton en faisant couler à chaud le liant selon l'invention dans un carton dont la paroi de la face interne est siliconée puis refroidi, les dimensions du carton étant adaptées à la masse et/ou au volume du pain de liant souhaité.

Lorsque le pain de liant selon l'invention est emballé d'un film thermofusible ou est conditionné dans un carton, la demanderesse a démontré que la détérioration dudit film thermofusible ou dudit carton lors du transport et/ou du stockage et/ou de la manipulation à température ambiante dudit pain de liant selon l'invention n'entrainait pas le fluage du liant. Par conséquent, les pains de liant selon l'invention conservent leur forme initiale et ne collent pas entre eux lors de leur transport et/ou stockage et/ou manipulation à température ambiante malgré le fait que le film thermofusible ou le carton soit endommagé. L'absence de fluage du liant selon l'invention sous forme de pain lors de son transport et/ou stockage et/ou manipulation à température ambiante est due à la présence du ou des additifs organogélateurs au sein du liant.

Le composé anti-agglomérant :

De façon optionnelle, comme exposé ci-dessus, le liant selon l'invention sous forme divisée solide à température ambiante, comme par exemple sous forme de granules ou de pains de liant solide à température ambiante, peut être partiellement enrobé d'un ou plusieurs composés anti-agglomérants.

Le composé anti-agglomérant est d'origine minérale ou organique. Par « anti-agglomérant » ou « composé anti-agglomérant », on entend tout composé qui limite, réduit, inhibe, retarde, l'agglomération et/ou l'adhésion des granules ou des pains entre eux lors de leur transport et/ou de leur stockage et/ou de leur manipulation à température ambiante et qui dans le cas des granules, assure également leur fluidité lors de leur manipulation.

Plus préférentiellement, le composé anti-agglomérant est choisi parmi : le talc ; les fines, également appelées "fillers", généralement de diamètre inférieur à 125 µm, telles que les fines silicieuses, à l'exception des fines calcaires ; les ultrafines ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les autres oxydes de silicium ; les fumées de silice ; la poudre de matière plastique ; la chaux ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Avantageusement, le composé anti-agglomérant est choisi parmi : les fines, généralement de diamètre inférieur à 125 µm ; les résidus de bois tels que la lignine, les poudres d'aiguilles de conifères et les poudres de cônes de conifères ; les fumées de silice ; leurs mélanges.

De préférence, le composé anti-agglomérant est choisi parmi les fumées de silice.

Au sens de l'invention, les composés « fumée de silice », et « silice pyrogénée » ont la même définition chimique et sont enregistrés sous le même numéro CAS 112 945-52-5. Par conséquent, au sens de l'invention on peut employer ces composés indifféremment l'un de l'autre

Par « silice pyrogénée », on entend, soit une silice pyrogénée, soit un dérivé de silice pyrogénée.

Par « silice pyrogénée », on entend un composé obtenu par l'hydrolyse en phase vapeur de chlorosilanes tels que le tétrachlorure de silicium, dans une flamme d'oxygène et d'hydrogène. De tels procédés sont généralement désignés comme des procédés pyrogènes dont la réaction globale est : $SiCl_4 + H_2 + O_2 \rightarrow SiO_2 + 4\ HCl$.

Les silices pyrogénées se distinguent des autres dioxydes de silicium en ce qu'elles présentent une structure amorphe. De haute pureté (> 99,8 % en silice), elles présentent un faible caractère hydrophile (pas de microporosité).

De préférence, le composé de silice pyrogénée est la silice pyrogénée.

Selon un mode de réalisation de l'invention, le composé de silice pyrogénée présente une surface spécifique comprise entre 25 et 420 $m^2/g$, préférentiellement entre 90 et 330 $m^2/g$, plus préférentiellement entre 120 et 280 $m^2/g$.

La surface spécifique de la silice pyrogénée définie en $m^2/g$ communément appelée « aire de surface » ou « SA » est mesurée selon la méthode de S. Brunauer, PH Emmet et I. Teller, J. Am. Chemical Society, 60: 309 (1938) (BET).

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur de carbone comprise entre 0,1 et 10% en poids par rapport au poids total du composé de silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Par « hydrophile », on entend un composé qui est miscible avec l'eau en toutes proportions.

Le composé de silice pyrogénée, ou dérivé de silice pyrogénée, utilisé au sens de l'invention peut être chimiquement modifié.

Différents types de composés de silice pyrogénée sont décrits dans les demandes de brevets suivants et peuvent être utilisés dans la présente invention :

- des silices pyrogénées silanisées, comme décrit dans WO 2004/020532, ou dans WO 2007/128636,
- des silices pyrogénées hydrophiles, comme décrit dans WO 2009/071467, WO 2011/000133 déposées au nom de Degussa AG ou Degussa Gmbh,
- des fumées de silice rendues hydrophobes par un traitement au moyen de polysiloxanes comme décrit dans WO 2008/141932, ou par silanisation comme décrit dans WO 2008/141930,
- des silices dopées par de l'oxyde de potassium comme décrit dans WO 2008/043635, WO 2008/022836,
- des silices sous forme d'agrégats de particules primaires comme décrit dans WO 2009/015969 déposé au nom de

Evonik Degussa Gmbh ou dans WO 2010/028261 déposé au nom de Cabot Corporation.

Le composé de silice pyrogénée peut être mis en œuvre seul ou sous forme d'un mélange au sein d'une composition de revêtement.

Qu'il soit mis en œuvre seul ou en mélange dans une composition, le composé de silice pyrogénée peut être mis en œuvre dans le procédé selon l'invention sous la forme d'une poudre ou en dispersion dans un solvant qui s'évapore après application.

De préférence, lorsque la composition de revêtement comprend au moins un composé de silice pyrogénée et au moins un solvant, la composition de revêtement comprend de 5 à 70% en poids de composé de silice pyrogénée par rapport au poids total de la composition de revêtement, plus préférentiellement de 20 à 40% en poids.

De préférence, le solvant est un solvant organique ou de l'eau. Par solvant organique, on entend tout solvant non miscible avec un bitume, tel qu'un alcool, par exemple l'éthanol.

Les fumées de silice utilisées dans l'invention sont commercialement disponibles et par exemple peuvent être vendus par Evonik Degussa sous la marque AEROSIL®, comme par exemple l'AEROSIL®200, par Cabot Corporation sous les marques CAB-O-SIL® et CAB-O-SPERSE® ou encore par Wacker Chemie AG sous la marque HDK®.

De préférence, la masse de l'anti-agglomérant recouvrant au moins une partie de la surface des granules ou des pains de liant est comprise entre 0,2% et 10% en masse, de préférence entre 0,5% et 8% en masse, plus préférentiellement entre 0,5% et 5% par rapport à la masse totale de liant selon l'invention, dans lesdits granules ou lesdits pains ou lesdites balles.

La couche d'anti-agglomérant recouvrant les granules ou les pains de liant selon l'invention est, de préférence, continue de façon à ce qu'au moins 90% de la surface du granule ou du pain de liant selon l'invention est recouverte d'au moins un anti-agglomérant, de préférence au moins 95%, plus préférentiellement au moins 99%. La couche d'anti-agglomérant doit être suffisamment épaisse pour que celle-ci soit continue.

Les granules ou les pains de liant solide à température ambiante sont recouverts de l'anti-agglomérant selon tout procédé connu, par exemple selon le procédé décrit dans le document US 3 026 568.

<u>Kit de liant solide à froid et sous forme divisée</u>

Un autre objet de l'invention concerne un kit comprenant au moins :

- un liant solide à froid et sous forme divisée tel que défini ci-dessus,
- une capsule comprenant au moins un additif tel que défini ci-dessus.

Selon un mode de réalisation de l'invention, le liant solide à froid et sous forme divisée est sous forme de pain.

Selon un mode de réalisation de l'invention, le liant sous forme de pain comprend sur une de ses faces, une cavité permettant de loger tout ou partie de la capsule.

Selon un mode de réalisation de l'invention, la capsule est logée en tout ou partie dans la cavité de manière amovible.

Selon ce mode de réalisation, la capsule peut être une capsule à enveloppe molle, notamment un sachet, ou une capsule à enveloppe dure.

De préférence, la capsule est en film plastique thermofusible, notamment en polyéthylène, ou en silicone.

Un autre objet de l'invention concerne l'utilisation du kit tel que défini ci-dessus dans le procédé de préparation d'un liant prêt pour application selon l'invention.

Selon un mode de réalisation de l'invention, le liant sous forme de pain et la capsule formant le kit tel que défini ci-dessus sont utilisés dans le procédé de préparation d'un liant simultanément ou consécutivement.

Dans une variante, lorsque le liant sous forme de pain et la capsule formant le kit tel que défini ci-dessus sont utilisés consécutivement dans le procédé de préparation d'un liant, ledit liant sous forme de pain est préalablement chauffé puis la capsule est ajoutée. Dans cette variante, avant le chauffage du pain de liant, la capsule est délogée de la cavité présente sur l'une des faces du pain.

Dans une autre variante, le liant sous forme de pain et la capsule formant le kit tel que défini ci-dessus sont utilisés simultanément dans le procédé de préparation d'un liant.

<u>Procédé de transport et/ou de stockage et/ou de manipulation du liant solide à température ambiante et sous forme divisée</u>

Un autre objet de l'invention concerne également un procédé de transport et/ou de stockage et/ou de manipulation du liant solide à température ambiante et sous forme divisée, le liant étant transporté et/ou stocké et/ou manipulé sous forme de pains ou de granules de liant solides à température ambiante. Le liant solide à température

ambiante et sous forme divisée est tel que décrit ci-dessus.

De préférence, le liant additivé de l'invention est transporté et/ou stocké à température ambiante pendant une durée supérieure ou égale à 2 mois, préférence à 3 mois.

Selon un mode de réalisation de l'invention, le liant solide à température ambiante de l'invention est transporté et/ou stocké à une température inférieure à 80°C. En particulier, la température de transport et/ou de stockage correspond à la température ambiante. On entend par température ambiante, la température qui est atteinte lors du transport et/ou de stockage du liant selon l'invention sans que ledit liant soit chauffé par tout type de procédé. Ainsi, la température ambiante peut atteindre des températures élevées, inférieures à 80°C durant les périodes estivales, en particulier dans les régions géographiques à climat chaud.

Avantageusement, la température ambiante est de 5°C à 70°C, de préférence de 10°C à 70°C, plus préférentiellement de 10°C à 60°C, encore plus préférentiellement de 15°C à 50°C.

Les liants solides à température ambiante et sous forme divisée selon la présente invention sont remarquables en ce qu'ils permettent le transport et/ou le stockage et/ou la manipulation de liants à température ambiante dans des conditions optimales, en particulier sans qu'il y ait fluage desdits liants solides lors de leur transport et/ou leur stockage et/ou leur manipulation, même lorsque la température ambiante est élevée et sans dégrader les propriétés du liant, voire en les améliorant.

Les granules de liant sont, de préférence, transportés et/ou du stockés et/ou manipulés en vrac dans des sacs de 1 kg à 100 kg ou de 500 kg à 1000 kg couramment appelés dans le domaine des bitumes routiers des « Big Bag », lesdits sacs étant de préférence en matériau thermofusible. Ils peuvent également être transportés et/ou stockés en vrac dans des cartons de 5 kg à 30 kg ou dans des fûts de 100 kg à 200 kg.

Utilisation des liants solides à température ambiante comme rejuvénant d'enrobés bitumineux

Les enrobés bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

De façon connue, les couches d'enrobés bitumineux qui ont été retirées des routes ou des trottoirs par exemple, sont concassées avant d'être réutilisées. On les appelle des agrégats d'enrobés bitumineux recyclés. Les liants solides selon l'invention peuvent être utilisés pour la fabrication de nouveaux enrobés bitumineux à partir d'agrégats d'enrobés bitumineux recyclés. Les liants solides selon l'invention ont la propriété de fluidifier les résidus bitumineux agrégés autour des granulats formant les agrégats d'enrobés bitumineux recyclés, d'augmenter l'adhésivité de la composition bitumineuse composée de liant et des résidus bitumineux et leur cohésion autour des granulats. Les liants solides selon l'invention permettent de réduire la température d'application des enrobés bitumineux formés à partir d'agrégats d'enrobés. En facilitant le mélange et l'homogénéisation des compositions issues des agrégats d'enrobés, ils permettent de former un enrobé bitumineux présentant une composition sensiblement homogène et des propriétés mécaniques sensiblement identiques à celles des enrobés bitumineux obtenus uniquement avec du bitume n'ayant jamais été mis en œuvre pour former des enrobés bitumineux.

Un autre objet de l'invention concerne un procédé de fabrication d'enrobés bitumineux à partir d'agrégats d'enrobés bitumineux recyclés, ce procédé comprenant au moins les étapes de :

- chauffage des agrégats d'enrobés bitumineux recyclés à une température allant de 100°C à 180°C, de préférence de 120°C à 160°C dans une cuve telle qu'un malaxeur ou un tambour malaxeur,
- introduction et mélange du liant solide selon l'invention,
- obtention d'enrobés bitumineux.

Le procédé de l'invention présente l'avantage de pouvoir être mis en œuvre sans étape préalable de chauffage des granules de liant solide.

Le procédé de fabrication d'enrobés selon l'invention ne requiert pas d'étape de chauffage des granules de liant solide avant mélange avec les agrégats d'enrobés recyclés car au contact du mélange d'agrégats chaud, le liant solide à température ambiante fond.

Le liant solide à température ambiante selon l'invention tel que décrit ci-dessus présente l'avantage de pouvoir être ajouté directement aux agrégats d'enrobés bitumineux recyclés chauds, sans avoir à être fondu préalablement au mélange avec les agrégats d'enrobés bitumineux recyclés.

Le liant solide sous forme divisée selon la présente invention est remarquable en ce qu'il permet le transport et/ou le stockage du liant à température ambiante dans des conditions optimales, en particulier sans qu'il y ait agglomération

et/ou adhésion du liant solide lors de son transport et/ou son stockage et/ou de sa manipulation, même lorsque la température ambiante est élevée. Par ailleurs, la présence des additifs organogélateurs dans le mélange de liant et d'agrégats d'enrobés bitumineux recyclés ne dégrade pas les propriétés des enrobés bitumineux obtenus pour une application routière, comparativement à un liant non additivé.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

**Partie expérimentale :**

Dans ces Exemples, les parties et pourcentages sont exprimés en poids sauf indication contraire.

I- Matières premières

Huile :

Régénis 50 ® : huile RAE, c'est-à-dire une huile aromatique, commercialisée par la société TOTAL sous la marque Régénis 50 ®.

Organogélateur :

On a utilisé :

- Composé A1 : le 2',3-bis[(3-[3, 5-di-tert-butyl-4-hydroxyphenyl]propionyl)]propionohydrazide (CAS 32687-78-8) commercialisé par la société BASF sous la marque Irganox MD 1024

Brai :

On a utilisé :

Un brai issu d'une opération de désasphaltage par l'addition de propane et présentant une température de ramollissement bille et anneau (TBA) de 59,6°C et une pénétrabilité à 25°C de 14 1/10 mm.

II- Méthodes de caractérisation

Pénétrabilité : norme NF EN 1426 à 25°C.

Température de ramollissement bille et anneaux (TBA) : norme EN 1427.

III- Préparation de liant selon l'invention

Les liants selon l'invention sont préparés selon le procédé général suivant :

(i) On chauffe l'huile à 170°C ;
(ii) On introduit le brai dans l'huile, et on mélange pendant 30 minutes avec une vitesse d'agitation de 400tr/min tout en maintenant la température du mélange égale à 170°C ;
(ii) On ajoute le composé organogélateur et on mélange 1 h à 170°C avec une vitesse d'agitation de 400 tr/min ;
(iii) Lorsque l'additif organogélateur est complètement dissout, l'agitation est arrêtée et le liquide est versé dans des moules puis laissé à refroidir à la température ambiante.

Les compositions de liant solide à température ambiante $\mathbf{C_0}$, $\mathbf{C_1}$ et $\mathbf{C_2}$ selon l'invention sont préparées selon le protocole décrit ci-dessus avec des constituants et proportions (en pourcentage massique par rapport à la masse totale des compositions de liant préparées) indiquées dans le Tableau 1 suivant :

**Tableau 1**

| Composition | $C_0$ | $C_1$ | $C_2$ |
|---|---|---|---|
| **Huile** | 17% | 17% | 17% |
| **Brai** | 83% | 82,2% | 81% |
| **Composé A1** | - | 0,8% | 2% |

Les compositions $\mathbf{C_1}$ et $\mathbf{C_2}$ sont selon l'invention. La composition $\mathbf{C_0}$ est comparative.

IV- Préparation de pains de liant solides

Les compositions de liant préparées ci-dessus sont coulées directement à chaud dans un moule puis laissées à refroidir à température ambiante. Après avoir constaté la solidification des compositions dans le moule, on démoule les compositions et on obtient des compositions sous forme de pain solide à température ambiante.

V- Préparation de granules de liant solides

Les granules $\mathbf{G_0}$, $\mathbf{G_1}$ et $\mathbf{G_2}$ sont préparés de manière respective à partir des compositions $\mathbf{C_0}$, $\mathbf{C_1}$ et $\mathbf{C_2}$ selon l'un des deux protocoles équivalents décrits ci-dessous.

5.1 Méthode générale pour la préparation de granules de liant solide à température ambiante

Les compositions de liant solide $\mathbf{C_0}$, $\mathbf{C_1}$ et $\mathbf{C_2}$, préparées précédemment, sont réchauffées à 160°C pendant deux heures à l'étuve avant d'être coulées dans un moule en silicone présentant différents trous de forme sphérique de façon à former des granules de liant. Après avoir constaté la solidification du liant dans le moule, le surplus est arasé avec une lame chauffée au bec bunsen. Après 30 minutes, le liant solide sous forme de granules est démoulé et stocké dans un plateau recouvert de papier siliconé. On laisse ensuite refroidir les granules à température ambiante pendant 10 à 15 minutes.

5.2 Méthode générale pour la préparation des granules de liant solide à température ambiante avec un procédé industriel

Pour la mise en œuvre de cette méthode, on peut utiliser un dispositif et un procédé tel que décrit de façon très détaillée dans le brevet US 4 279 579. Différents modèles de ce dispositif sont disponibles commercialement auprès de la société Sandvik sous le nom commercial de Rotoform.

Des granules de liant solide peuvent également être obtenus à partir des compositions de liant $\mathbf{C_0}$, $\mathbf{C_1}$ et $\mathbf{C_2}$ versée dans le réservoir d'un tel dispositif et maintenues à une température comprise entre 130 et 180°C.

Une buse ou plusieurs buses d'injection permet(tent) le transfert de la composition de liant $\mathbf{C_0}$, $\mathbf{C_1}$ ou $\mathbf{C_2}$ à l'intérieur du double tambour de pastillation comportant un tambour externe rotatif, les deux tambours étant équipés de fentes, de buses et d'orifices permettant la pastillation de gouttes de liant au travers du premier tambour fixe et des orifices présentant un diamètre compris entre 2 et 8 mm du tambour externe rotatif. Les gouttes de liant sont déposées sur la face supérieure d'une bande de roulement, horizontale, entrainée par des rouleaux.

VI- Stabilité au stockage

Cet essai est mis en œuvre afin d'évaluer la résistance à la charge des granules de liant $\mathbf{G_0}$, $\mathbf{G_1}$ et $\mathbf{G_2}$ préparés ci-dessus à une température de 65°C sous un effort en compression. En effet, cet essai permet de simuler les conditions de température et de compression des granules les uns sur les autres auxquelles ils sont soumis lors du transport et/ou du stockage en vrac dans des sacs de 10 à 100 kg ou dans des Big Bag de 500 à 1000 kg ou dans des fûts de 200 kg et d'évaluer leur résistance dans ces conditions.

L'essai de résistance à la charge est réalisé selon le protocole suivant : 5 mL de granules sont placés dans une seringue de 20 mL puis le piston est placé sur les granules ainsi qu'une masse de 208g, représentant une force appliquée comme dans un Big Bag. Le tout est placé à l'étuve à 65°C pendant au moins 4 heures. Les observations sont répertoriées dans le tableau 2 ci-dessous.

**Tableau 2**

| Granules | $G_0$ | $G_1$ | $G_2$ |
|---|---|---|---|
| Tenue à température ambiante à 65°C | -- | + | ++ |
| +++ : les granules conservent leur forme initiale et n'adhèrent pas entre eux.<br>++ : les granules n'adhérent pas entre eux mais sont légèrement déformés.<br>+ les granules adhèrent légèrement entre eux.<br>- : les granules sont partiellement fondus.<br>- : les granules sont fondus. | | | |

Les granules $\mathbf{G_1}$ et $\mathbf{G_2}$ présentent une très bonne résistance à une température ambiante de 60°C dans la mesure où ils n'adhèrent que très peu ou pas du tout entre eux. Les granules $\mathbf{G_2}$ sont avantageux en ce qu'ils n'adhèrent pas du tout entre eux. Ainsi, la manipulation et le transport/stockage desdits granules $\mathbf{G_1}$ et $\mathbf{G_2}$ seront aisés dans la mesure où les granules ne s'agglomèrent que très peu, voire pas du tout à température ambiante élevée.

**Revendications**

**1.** Liant solide à température ambiante comprenant :

- au moins une huile hydrocarbonée choisie parmi les huiles aromatiques ayant une teneur en composés aromatiques comprise entre 30 et 95% en masse,
- au moins un brai,
- au moins un additif chimique organogélateur.

**2.** Liant selon la revendication 1 dans laquelle l'huile hydrocarbonée est choisie parmi les huiles hydrocarbonées d'origine pétrolière.

**3.** Liant selon l'une quelconque des revendications précédentes dans laquelle l'huile hydrocarbonée est choisie parmi les huiles aromatiques ayant une teneur en composés aromatiques comprise entre 50 et 95% en masse, plus avantageusement comprise entre 60 et 95% en masse en masse par rapport à la masse totale de l'huile aromatique.

**4.** Liant selon la revendication 3, dans laquelle l'huile aromatique a une viscosité cinématique à 100°C comprise entre 0,1 et 150 $mm^2/s$, avantageusement comprise entre 5 et 120 $mm^2/s$, plus avantageusement comprise entre 7 et 90 $mm^2/s$.

**5.** Liant selon l'une quelconque des revendications précédentes, dans laquelle le brai a une pénétrabilité à 25°C allant de 0 à 20 1/10 mm, étant entendu que la pénétrabilité est mesurée selon la norme EN 1426.

**6.** Liant selon la revendication 5, dans laquelle le brai présente une température de ramollissement bille et anneau (TBA), mesurée selon la norme EN 1427, allant de 55°C à 110°C.

**7.** Liant selon l'une quelconque des revendications précédentes dans laquelle le composé organogélateur présente une masse molaire inférieure ou égale à 2000 $gmol^{-1}$.

**8.** Liant selon l'une quelconque des revendications précédentes, qui comprend de 0,2 % à 5 % en masse, plus préférentiellement de 0,5 % à 3,5 % en masse d'additif organogélateur par rapport à la masse totale du liant.

**9.** Liant selon l'une quelconque des revendications précédentes, sous forme de granules ou de pains.

**10.** Kit comprenant au moins :

- un liant solide à température ambiante selon l'une quelconque des revendications 1 à 9,
- une capsule comprenant au moins un additif.

**11.** Procédé de préparation d'un liant solide à température ambiante selon l'une quelconque des revendications 1 à 9, comprenant :

(i) Le mélange de l'huile et du brai, et le chauffage à une température comprise entre 140 et 200°C,
(ii) L'ajout du composé organogélateur, le mélange et le chauffage à une température comprise entre 140 et 200°C,
(iii) L'ajout éventuel d'un ou de plusieurs autres additifs, le mélange et le chauffage à une température comprise entre 140 et 200°C,
(iv) La mise en forme de la composition, par exemple sous forme de granules ou de pains.
(v) Le refroidissement à température ambiante.

**12.** Procédé de transport et/ou de stockage et/ou de manipulation d'un liant solide à température ambiante et sous forme divisée selon l'une quelconque revendications 1 à 9, ou de kit comprenant un tel liant selon la revendication 10, le liant étant transporté et/ou stocké et/ou manipulé sous forme de pains ou de granules solide à température ambiante.

**13.** Utilisation d'un liant solide à température ambiante et sous forme divisée comprenant :

- au moins une huile choisie parmi une huile hydrocarbonée choisie parmi les huiles aromatiques ayant une teneur en composés aromatiques comprise entre 30 et 95% en masse,
- au moins un additif chimique organogélateur,

pour la fabrication d'enrobés bitumineux comprenant des agrégats d'enrobés bitumineux recyclés.

**14.** Utilisation selon la revendication 13, dans laquelle le liant solide à température ambiante et sous forme divisée est selon l'une quelconque des revendications 1 à 9 ou sous forme d'un kit selon la revendication 10.

## Patentansprüche

**1.** Festes Bindemittel bei Umgebungstemperatur, umfassend:

- mindestens ein Kohlenwasserstofföl, ausgewählt aus den aromatischen Ölen mit einem Gehalt an aromatischen Verbindungen im Bereich zwischen 30 und 95 Massenprozent,
- mindestens ein Pech,
- mindestens einen chemischen Organogelzusatz.

**2.** Bindemittel nach Anspruch 1, wobei das Kohlenwasserstofföl ausgewählt ist aus den Kohlenwasserstoffölen auf Erdölbasis.

**3.** Bindemittel nach einem der vorhergehenden Ansprüche, wobei das Kohlenwasserstofföl ausgewählt ist aus den aromatischen Ölen mit einem Gehalt an aromatischen Verbindungen im Bereich zwischen 50 und 95 Massenprozent, vorteilhafterweise im Bereich zwischen 60 und 95 Massenprozent mit Bezug auf die gesamte Masse des aromatischen Öls.

**4.** Bindemittel nach Anspruch 3, wobei das aromatische Öl eine kinematische Viskosität bei 100 °C im Bereich zwischen 0,1 und 150 $mm^2/s$, vorteilhafterweise im Bereich zwischen 5 und 120 $mm^2/s$, noch bevorzugter im Bereich zwischen 7 und 90 $mm^2/s$ aufweist.

**5.** Bindemittel nach einem der vorhergehenden Ansprüche, wobei das Pech eine Durchdringbarkeit bei 25 °C aufweist, die von 0 bis 20 1/10 mm reicht, wobei davon ausgegangen wird, dass die Durchdringbarkeit gemäß der Norm EN 1426 gemessen wird.

**6.** Bindemittel nach Anspruch 5, wobei das Pech eine Erweichungstemperatur Ring und Kugel (EP RuK), gemessen gemäß der Norm EN 1427, aufweist, die von 55 °C bis 110 °C reicht.

**7.** Bindemittel nach einem der vorhergehenden Ansprüche, wobei die Organogelverbindung eine Molmasse von weniger als oder gleich wie 2000 gmol-1 aufweist.

**8.** Bindemittel nach einem der vorhergehenden Ansprüche, das von 0,2 Massenprozent bis 5 Massenprozent, noch bevorzugter von 0,5 Massenprozent bis 3,5 Massenprozent Organogelzusatz mit Bezug auf die gesamte Masse des Bindemittels umfasst.

**9.** Bindemittel nach einem der vorhergehenden Ansprüche in Form von Körnchen oder Stücken.

**10.** Kit, umfassend mindestens:

- ein festes Bindemittel bei Umgebungstemperatur nach einem der Ansprüche 1 bis 9,
- eine Kapsel, umfassend mindestens einen Zusatz.

**11.** Verfahren zur Herstellung eines festen Bindemittels bei Umgebungstemperatur nach einem der Ansprüche 1 bis 9, umfassend:

(i) Mischen des Öls und des Pechs und Erhitzen auf eine Temperatur im Bereich zwischen 140 und 200 °C.
(ii) Hinzufügen der Organogelverbindung, Mischen und der Erhitzen auf eine Temperatur im Bereich zwischen 140 und 200 °C,
(iii) Eventuelles Hinzufügen eines oder mehrerer Zusätze, Mischen und Erhitzen auf eine Temperatur im Bereich zwischen 140 und 200 °C,
(iv) Formgeben der Zusammensetzung, z. B. in Form von Körnchen oder Stücken.
(v) Abkühlen auf Umgebungstemperatur.

**12.** Verfahren zum Transportieren und/oder Lagern und/oder Handhaben eines festen Bindemittels bei Umgebungstemperatur und in geteilter Form nach einem der Ansprüche 1 bis 9, oder Kit, umfassend ein derartiges Bindemittel nach Anspruch 10, wobei das Bindemittel in Form von festen Stücken oder Körnchen bei Umgebungstemperatur transportiert und/oder gelagert und/oder gehandhabt wird.

**13.** Verwendung eines festen Bindemittels bei Umgebungstemperatur und in geteilter Form, umfassend:

• mindestens ein Öl, ausgewählt aus einem Kohlenwasserstofföl, ausgewählt aus den aromatischen Ölen mit einem Gehalt an aromatischen Verbindungen im Bereich zwischen 30 und 95 Massenprozent,
• mindestens einen chemischen Organogelzusatz zur Herstellung von bituminösen Mischgütern, umfassend Aggregate von recycelten bituminösen Mischgütern.

**14.** Verwendung nach Anspruch 13, wobei das feste Bindemittel bei Umgebungstemperatur und in geteilter Form nach einem der Ansprüche 1 bis 9 und in Form eines Kits nach Anspruch 10 vorliegt.

## Claims

**1.** A binder solid at ambient temperature, comprising:

• at least one hydrocarbon oil chosen from among aromatic oils having a content of aromatic compounds between 30 and 95 weight %,
• at least one pitch,
• at least one chemical organogelator additive.

**2.** The binder according to claim 1, wherein the hydrocarbon oil is chosen from among hydrocarbon oils of petroleum origin.

**3.** The binder according to any of the preceding claims, wherein the hydrocarbon oil is chosen from aromatic oils having a content of aromatic compounds between 50 and 95 weight %, more advantageously between 60 and 95 weight % relative to the total weight of the aromatic oil.

**4.** The binder according to claim 3, wherein the aromatic oil has kinematic viscosity at 100 °C between 0.1 and 150 $mm^2/s$, advantageously between 5 and 120 $mm^2/s$, more advantageously between 7 and 90 $mm^2/s$.

**5.** The binder according to any of the preceding claims, wherein the pitch has a penetration value at 25°C ranging from 0 to 20 1/10, on the understanding that penetration is measured according to standard EN 1426.

**6.** The binder according to claim 5, wherein the pitch has a Ring-and-Ball softening point measured according to standard EN 1427 ranging from 55°C to 110°C.

7. The binder according to any of the preceding claims, wherein the organogelator compound has a molar mass lower than or equal to 2000 $gmol^{-1}$.

8. The binder according to any of the preceding claims comprising from 0.2 to 5 weight %, more preferably from 0.5 to 3.5 weight % of organogelator additive relative to the total weight of the binder.

9. The binder according to any of the preceding claims, in the form of granules or blocks.

10. A kit comprising at least:

- a binder solid at ambient temperature according to any of claims 1 to 9,
- a capsule comprising at least one additive.

11. A process to prepare a binder solid at ambient temperature according to any of claims 1 to 9, comprising:

i. mixing the oil and pitch, and heating to a temperature of between 140 and 200°C;
ii. adding the organogelator compound, mixing and heating to a temperature of between 140 and 200°C;
iii. optionally adding one or more other additives, mixing and heating to a temperature of between 140 and 200°C;
iv. forming the composition for example in the form of granules or blocks;
v. cooling to ambient temperature.

12. A method for transporting and/or storing and/or handling a binder solid at ambient temperature and in divided form according to any of claims 1 to 9, or a kit comprising said binder according to claim 10, said binder being transported and/or stored and/or handled in the form of blocks or granules solid at ambient temperature.

13. Use of a binder solid at ambient temperature and in divided form comprising:

• at least one oil chosen from hydrocarbon oils chosen from among aromatic oils having a content of aromatic compounds between 30 and 95 weight %;
• at least one chemical organogelator additive,

for the manufacture of bituminous asphalts comprising recycled bituminous asphalt aggregates.

14. The use according to claim 13, wherein the binder solid at ambient temperature and in divided form is according to any of claims 1 to 9, or in the form of a kit according to claim 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008107551 A
- WO 2016016320 A
- JP 2169669 A
- FR 3014111
- US 20040069685 A
- US 4305812 A
- US 4455216 A
- US 3026568 A
- WO 2009153324 A
- WO 2012168380 A
- US 20110290695 A
- WO 2004020532 A
- WO 2007128636 A
- WO 2009071467 A
- WO 2011000133 A
- WO 2008141932 A
- WO 2008141930 A
- WO 2008043635 A
- WO 2008022836 A
- WO 2009015969 A
- WO 2010028261 A
- US 4279579 A


### Littérature non-brevet citée dans la description


- **LEE et al.** *Fuel Processing Technology*, 2014, vol. 119, 204-210
- *CHEMICAL ABSTRACTS*, 112 945-52-5
- **S. BRUNAUER** ; **PH EMME** ; **I. TELLER**. *J. Am. Chemical Society*, 1938, vol. 60, 309
- *CHEMICAL ABSTRACTS*, 32687-78-8